# EUROPEAN PATENT APPLICATION

(11) **EP 4 807 440 A1**
(43) Date of publication of application: **16.09.2026**
(21) Application number: 25163796.3
(22) Date of filing: 14.03.2025
(51) Int. Cl.: G02F 1/35, G02F 1/365

(54) **BROADBAND RADIATION GENERATION**

(71) Applicant: ASML Netherlands B.V., 5500 AH Veldhoven (NL)
(72) Inventor: UEBEL, Patrick, Sebastian, 5500 AH Veldhoven (NL); KOHLER, Johannes, Richard, Karl, 5500 AH Veldhoven (NL)
(74) Representative: ASML Netherlands B.V.

(57) **Abstract**

A broadband light source device comprising a radiation source for generating pulses of pump radiation, and a hollow-core photonic crystal fiber (HC-PCF) comprising a hollow core (HC). The HC-PCF comprises: a first region in which the HC has a first diameter; a second down-tapered region wherein a diameter of the HC reduces over its length from the first to a second diameter; a third region in which the HC has the second diameter; and a fourth up-tapered region, wherein a diameter of the HC increases over its length from the second to the first diameter. Parameter(s) of each of (i) a working medium disposed in the HC (ii) a pulse of pump radiation, and (iii) the regions, is selected such that the pulse is broadened in the first, second and third regions based on soliton-self compression, and further broadened in the fourth region based on self-steepening.

## Description

### FIELD

The present invention relates to a broadband light source device. In particular, a broadband light source device configured for generating broadband output radiation upon receiving pulses of pump radiation.

### BACKGROUND

A lithographic apparatus is a machine constructed to apply a desired pattern onto a substrate. A lithographic apparatus can be used, for example, in the manufacture of integrated circuits (ICs). A lithographic apparatus may, for example, project a pattern (also often referred to as "design layout" or "design") at a patterning device (e.g., a mask) onto a layer of radiation-sensitive material (resist) provided on a substrate (e.g., a wafer).

To project a pattern on a substrate a lithographic apparatus may use electromagnetic radiation. The wavelength of this radiation determines the minimum size of features which can be formed on the substrate. Typical wavelengths currently in use are 365 nm (i-line), 248 nm, 193 nm and 13.5 nm. A lithographic apparatus, which uses extreme ultraviolet (EUV) radiation, having a wavelength within the range 4-20 nm, for example 6.7 nm or 13.5 nm, may be used to form smaller features on a substrate than a lithographic apparatus which uses, for example, radiation with a wavelength of 193 nm.

Low-k₁ lithography may be used to process features with dimensions smaller than the classical resolution limit of a lithographic apparatus. In such process, the resolution formula may be expressed as CD = k₁ ×λ/NA, where λ is the wavelength of radiation employed, NA is the numerical aperture of the projection optics in the lithographic apparatus, CD is the "critical dimension" (generally the smallest feature size printed, but in this case half-pitch) and k₁ is an empirical resolution factor. In general, the smaller k₁ the more difficult it becomes to reproduce the pattern on the substrate that resembles the shape and dimensions planned by a circuit designer in order to achieve particular electrical functionality and performance. To overcome these difficulties, sophisticated fine-tuning steps may be applied to the lithographic projection apparatus and/or design layout. These include, for example, but not limited to, optimization of NA, customized illumination schemes, use of phase shifting patterning devices, various optimization of the design layout such as optical proximity correction (OPC, sometimes also referred to as "optical and process correction") in the design layout, or other methods generally defined as "resolution enhancement techniques" (RET). Alternatively, tight control loops for controlling a stability of the lithographic apparatus may be used to improve reproduction of the pattern at low k1.

In the field of lithography, many measurement systems may be used, both within a lithographic apparatus and external to a lithographic apparatus. Generally, such a measurements system may use a radiation source to irradiate a target with radiation, and a detection system operable to measure at least one property of a portion of the incident radiation that scatters from the target. An example of a measurement system that is external to a lithographic apparatus is an inspection apparatus or a metrology apparatus, which may be used to determine properties of a pattern previously projected onto a substrate by the lithographic apparatus. Such an external inspection apparatus may, for example, comprise a scatterometer. Examples of measurement systems that may be provided within a lithographic apparatus include: a topography measurement system (also known as a level sensor); a position measurement system (for example an interferometric device) for determining position of a reticle or wafer stage; and an alignment sensor for determining a position of an alignment mark. These measurement devices may use electromagnetic radiation to perform the measurement.

Different types of radiation may be used to interrogate different types of properties of a pattern. Some measurements system may use a broadband radiation source. Such a broadband radiation source may comprise a waveguide (for example, an optical fiber) having a non-linear medium through which a pulsed pump radiation beam is propagated to broaden a spectrum of the radiation.

### SUMMARY

According to one aspect of the present disclosure there is provided a broadband light source device (RDS), configured for generating broadband output radiation upon receiving pulses of pump radiation, comprising:
a pump radiation source (PRS) for generating the pulses of pump radiation;
a hollow-core photonic crystal fiber, HC-PCF, comprising a hollow core and a working medium disposed in the hollow core; wherein the HC-PCF comprises:
   a first region comprising an input end of the HC-PCF, the first region arranged to receive a pulse of pump radiation output by the pump radiation source, wherein the hollow core in the first region has a first diameter over the length of the first region;
   a second down-tapered region, wherein a diameter of the hollow core in the second down-tapered region reduces over the length of the second down-tapered region from the first diameter to a second diameter;
   a third region, wherein the hollow core in the third region has the second diameter over the length of the third region; and
   a fourth up-tapered region, wherein a diameter of the hollow core in the fourth up-tapered region increases over the length of the fourth up-tapered region;
wherein at least one parameter of each of (i) the working medium, (ii) the pulse of pump radiation, and (iii) the regions, is selected such that the pulse of pump radiation is spectrally broadened in the first region, the second down-tapered region, and the third region based on soliton-self compression, and the pulse of pump radiation is further spectrally broadened in the fourth up-tapered region based on self-steepening.

A soliton order of the pulse of pump radiation may be less than 15, and the at least one parameter of each of (i) the working medium, (ii) the pulse of pump radiation, and (iii) the regions, may be selected such that the soliton order of the pulse remains less than 15 as the pulse propagates along the length of one or more regions of the HC-PCF.

The at least one parameter of each of (i) the working medium, (ii) the pulse of pump radiation, and (iii) the regions, may be selected such that a group-velocity dispersion at a central frequency of the pulse in the third region is anomalous.

The at least one parameter of each of (i) the working medium, (ii) the pulse of pump radiation, and (iii) the regions, may be selected such that the group-velocity dispersion at the central frequency of the pulse in the first region is anomalous, and the group-velocity dispersion at the central frequency of the pulse in the third region is more strongly anomalous than in the first region.

The working medium may comprise a gas, and the at least one parameter of the gas is a gas pressure.

The pulses of pump radiation may have a pulse duration of less than 200 fs, optionally less than 150 fs, further optionally less than 100 fs.

The at least one parameter of each of (i) the working medium, (ii) the pulse of pump radiation, and (iii) the regions, may be selected such that a pulse duration of the pulse in the third region is less than 20 fs.

The at least one parameter of each of (i) the working medium, (ii) the pulse of pump radiation, and (iii) the regions, may be selected such that a peak intensity of the pulse at an input of the third region is less than the peak intensity of the pulse at an input of the fourth region.

The pulses of pump radiation may have a pulse energy of at least 100 nJ, optionally at least 200 nJ, optionally at least 400 nJ.

The pulses of pump radiation may have a pulse energy less than 1.5 µJ, optionally less than 1 µJ, optionally less than 0.5 µJ.

A length of the third region may be less than at least one of the second down-tapered region and the fourth up-tapered region.

A length of the third region may be less than 8 cm, optionally less than 6 cm, optionally less than 4 cm.

The diameter of the hollow core in the fourth up-tapered region increases over the length of the fourth up-tapered region from the second diameter to a diameter that is greater than the second diameter.

The diameter that is greater than the second diameter may be the first diameter.

The fourth up-tapered region may comprise an output end of the HC-PCF, Alternatively, the HC-PCF may further comprise a fifth region coupled to the fourth up-tapered region, and the pulse of pump radiation is further spectrally broadened in the fifth region based on self-steepening, wherein the fifth region comprises an output end of the HC-PCF.

The hollow core in the fifth region may have the diameter that is greater than the second diameter.

The at least one parameter of each of (i) the working medium, (ii) the pulse of pump radiation, and (iii) the regions, may be selected such that a peak intensity of the pulse at the input of the third region is less than the peak intensity of the pulse at the input of the fifth region.

A length of the fifth region may be less than a length of the first region.

A length of the fifth region may be less than a length of at least one of the second down-tapered region, the third region, and the fourth up-tapered region.

The HC-PCF may further comprise a plurality of anti-resonant elements surrounding the hollow core in the first region, the plurality of anti-resonant elements surround the hollow core in at least the second down-tapered region, and further wherein a cross-sectional area of each of the anti-resonant elements decreases in the second down-tapered region with increasing distance from the first region.

The first region may have a length such that the pulse of pump radiation has a pulse duration of less than 60 fs at an input of the second down-tapered region.

At least one of the second down-tapered region and the fourth up-tapered region may be tapered in an adiabatic manner such that propagation of the fundamental mode is substantially maintained.

According to another aspect of the present disclosure there is provided a metrology apparatus for determining a parameter of interest of a structure of a substrate comprising the broadband light source device according to any of the embodiments described herein.

According to another aspect of the present disclosure there is provided a lithographic apparatus comprising the metrology apparatus according to any of the embodiments described herein.

According to another aspect of the present disclosure there is provided a lithographic apparatus comprising the broadband light source device according to any of the embodiments described herein.

According to another aspect of the present disclosure there is provided a method of generating broadband output radiation, the method comprising:
selecting at least one parameter of each of (i) a working medium of a hollow-core photonic crystal fiber, HC-PCF, (ii) a pulse of pump radiation, and (iii) regions of the HC-PCF, wherein the regions of the HC-PCF comprise:
   a first region comprising an input end of the HC-PCF, the first region arranged to receive the pulse of pump radiation, wherein the hollow core in the first region has a first diameter over the length of the first region;
   a second down-tapered region, wherein a diameter of the hollow core in the second down-tapered region reduces over the length of the second down-tapered region from the first diameter to a second diameter;
   a third region, wherein the hollow core in the third region has the second diameter over the length of the third region; and
   a fourth up-tapered region, wherein a diameter of the hollow core in the fourth up-tapered region increases over the length of the fourth up-tapered region;
generating the pulse of pump radiation for reception by, and propagation through, the HC-PCF from the input end to an output end of the HC-PCF;
wherein the at least one parameter of each of (i) the working, (ii) the pulse of pump radiation, and (iii) the regions of the HC-PCF, are selected such that the pulse of pump radiation is spectrally broadened in the first region, the second down-tapered region, and the third region based on soliton-self compression, and the pulse of pump radiation is further spectrally broadened in the fourth up-tapered region based on self-steepening.

### BRIEF DESCRIPTION OF THE DRAWINGS

Embodiments of the invention will now be described, by way of example only, with reference to the accompanying schematic drawings, in which:
- Figure 1 depicts a schematic overview of a lithographic apparatus;
- Figure 2 depicts a schematic overview of a lithographic cell;
- Figure 3 depicts a schematic representation of holistic lithography, representing a cooperation between three key technologies to optimize semiconductor manufacturing;
- Figure 4 depicts a schematic overview of a scatterometry apparatus used as a metrology device;
- Figure 5 depicts a schematic overview of a level sensor apparatus;
- Figure 6 depicts a schematic overview of an alignment sensor apparatus;
- Figure 7 is a schematic cross sectional view of a hollow core optical fiber in a transverse plane (i.e. perpendicular to an axis of the optical fiber);
- Figure 8 depicts a schematic representation of a broadband light source device for providing broadband output radiation;
- Figures 9 (a) and (b) schematically depict the transverse cross-sections of examples of hollow core photonic crystal fiber (HC-PCF) designs for supercontinuum generation;
- Figure 10 depicts numerically simulated exemplary spectral evolution of a femtosecond pulse undergoing soliton self-compression (SSC) in an example untapered HC-PCF;
- Figure 11 illustrates the (i) temporal shape of an input pulse supplied to the input end of the example untapered HC-PCF of Figure 10, and (ii) the temporal shape of a compressed pulse at the output of the example untapered HC-PCF of Figure 10;
- Figure 12 shows the optical spectrum of the radiation at the output of the example untapered HC-PCF of Figure 10;
- Figure 13 depicts a schematic representation of a HC-PCF that may be used in a broadband light source device according to some embodiments of the invention;
- Figure 14a depicts the variation of a pulse duration of a pulse of pump radiation as it propagates through an example HC-PCF according to some embodiments of the invention;
- Figure 14b depicts the variation of the hollow core diameter along the example HC-PCF, and the variation of group-velocity dispersion along the example HC-PCF.
- Figure 15 illustrates the spectral evolution of a pulse of pump radiation IRD as it propagates along the length of the example HC-PCF shown in Figures 14a and 14b;
- Figure 16 illustrates the power spectra at several positions along the length of the example HC-PCF shown in Figures 14a and 14b;
- Figure 17(a) depicts the temporal optical power profile of (i) a pulse at the end of a down-tapered region of the example HC-PCF shown in Figures 14a and 14b; (ii) a pulse undergoing pure SSC in an example untapered fiber at the same relation position;
- Figure 17(b) depicts the temporal optical power profile of (i) a pulse at the end of a waist region of the example HC-PCF shown in Figures 14a and 14b; (ii) a pulse undergoing pure SSC in an example untapered fiber at the same relation position;
- Figure 17(c) depicts the temporal optical power profile of (i) a pulse at the end of an up-tapered region of the example HC-PCF shown in Figures 14a and 14b; (ii) a pulse undergoing pure SSC in an example untapered fiber at the same relation position;
- Figure 17(d) depicts the temporal optical power profile of (i) a pulse at the end of the example HC-PCF shown in Figures 14a and 14b; (ii) a pulse undergoing pure SSC in an example untapered fiber at the same relation position;
- Figure 18 illustrates a taper angle in a HC-PCF;
- Figure 19a illustrates linear plots of power spectral density of the example HC-PCF shown in Figures 14a and 14b and of the example untapered fiber; and
- Figure 19b illustrates logarithmic plots of power spectral density of the example HC-PCF shown in Figures 14a and 14b and of the example untapered fiber.

### DETAILED DESCRIPTION

In the present document, the terms "radiation" and "beam" are used to encompass all types of electromagnetic radiation, including ultraviolet radiation (e.g. with a wavelength of 365, 248, 193, 157 or 126 nm) and EUV (extreme ultra-violet radiation, e.g. having a wavelength in the range of about 5-100 nm).

The term "reticle", "mask" or "patterning device" as employed in this text may be broadly interpreted as referring to a generic patterning device that can be used to endow an incoming radiation beam with a patterned cross-section, corresponding to a pattern that is to be created in a target portion of the substrate. The term "light valve" can also be used in this context. Besides the classic mask (transmissive or reflective, binary, phase-shifting, hybrid, etc.), examples of other such patterning devices include a programmable mirror array and a programmable LCD array.

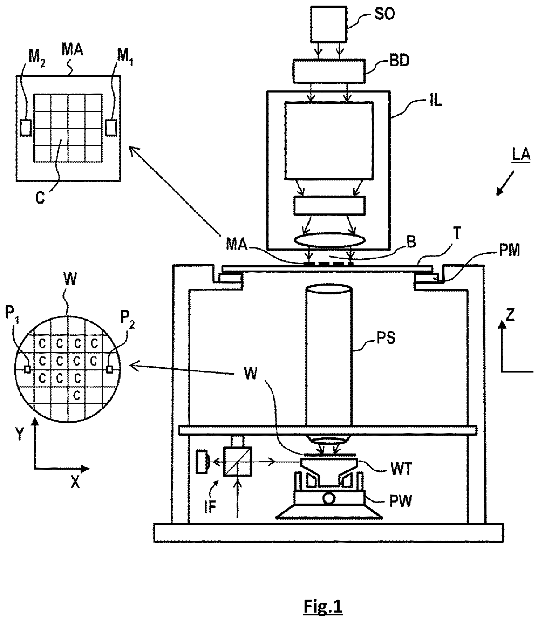

Figure 1 schematically depicts a lithographic apparatus LA. The lithographic apparatus LA includes an illumination system (also referred to as illuminator) IL configured to condition a radiation beam B (e.g., UV radiation, DUV radiation or EUV radiation), a mask support (e.g., a mask table) MT constructed to support a patterning device (e.g., a mask) MA and connected to a first positioner PM configured to accurately position the patterning device MA in accordance with certain parameters, a substrate support (e.g., a wafer table) WT constructed to hold a substrate (e.g., a resist coated wafer) W and connected to a second positioner PW configured to accurately position the substrate support in accordance with certain parameters, and a projection system (e.g., a refractive projection lens system) PS configured to project a pattern imparted to the radiation beam B by patterning device MA onto a target portion C (e.g., comprising one or more dies) of the substrate W.

In operation, the illumination system IL receives a radiation beam from a radiation source SO, e.g. via a beam delivery system BD. The illumination system IL may include various types of optical components, such as refractive, reflective, magnetic, electromagnetic, electrostatic, and/or other types of optical components, or any combination thereof, for directing, shaping, and/or controlling radiation. The illuminator IL may be used to condition the radiation beam B to have a desired spatial and angular intensity distribution in its cross section at a plane of the patterning device MA.

The term "projection system" PS used herein should be broadly interpreted as encompassing various types of projection system, including refractive, reflective, catadioptric, anamorphic, magnetic, electromagnetic and/or electrostatic optical systems, or any combination thereof, as appropriate for the exposure radiation being used, and/or for other factors such as the use of an immersion liquid or the use of a vacuum. Any use of the term "projection lens" herein may be considered as synonymous with the more general term "projection system" PS.

The lithographic apparatus LA may be of a type wherein at least a portion of the substrate may be covered by a liquid having a relatively high refractive index, e.g., water, so as to fill a space between the projection system PS and the substrate W - which is also referred to as immersion lithography. More information on immersion techniques is given in US6952253, which is incorporated herein by reference.

The lithographic apparatus LA may also be of a type having two or more substrate supports WT (also named "dual stage"). In such "multiple stage" machine, the substrate supports WT may be used in parallel, and/or steps in preparation of a subsequent exposure of the substrate W may be carried out on the substrate W located on one of the substrate support WT while another substrate W on the other substrate support WT is being used for exposing a pattern on the other substrate W.

In addition to the substrate support WT, the lithographic apparatus LA may comprise a measurement stage. The measurement stage is arranged to hold a sensor and/or a cleaning device. The sensor may be arranged to measure a property of the projection system PS or a property of the radiation beam B. The measurement stage may hold multiple sensors. The cleaning device may be arranged to clean part of the lithographic apparatus, for example a part of the projection system PS or a part of a system that provides the immersion liquid. The measurement stage may move beneath the projection system PS when the substrate support WT is away from the projection system PS.

In operation, the radiation beam B is incident on the patterning device, e.g. mask, MA which is held on the mask support MT, and is patterned by the pattern (design layout) present on patterning device MA. Having traversed the mask MA, the radiation beam B passes through the projection system PS, which focuses the beam onto a target portion C of the substrate W. With the aid of the second positioner PW and a position measurement system IF, the substrate support WT can be moved accurately, e.g., so as to position different target portions C in the path of the radiation beam B at a focused and aligned position. Similarly, the first positioner PM and possibly another position sensor (which is not explicitly depicted in Figure 1) may be used to accurately position the patterning device MA with respect to the path of the radiation beam B. Patterning device MA and substrate W may be aligned using mask alignment marks M1, M2 and substrate alignment marks P1, P2. Although the substrate alignment marks P1, P2 as illustrated occupy dedicated target portions, they may be located in spaces between target portions. Substrate alignment marks P1, P2 are known as scribe-lane alignment marks when these are located between the target portions C.

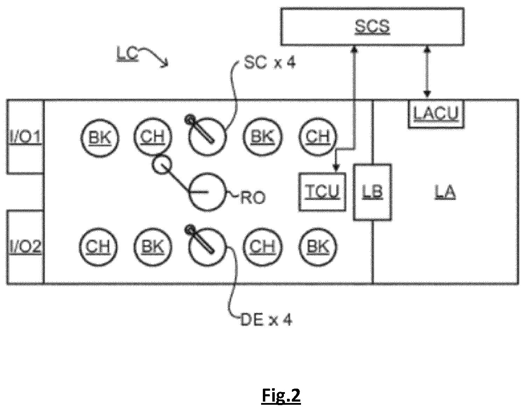

As shown in Figure 2 the lithographic apparatus LA may form part of a lithographic cell LC, also sometimes referred to as a lithocell or (litho)cluster, which often also includes apparatus to perform pre- and post-exposure processes on a substrate W. Conventionally these include spin coaters SC to deposit resist layers, developers DE to develop exposed resist, chill plates CH and bake plates BK, e.g. for conditioning the temperature of substrates W e.g. for conditioning solvents in the resist layers. A substrate handler, or robot, RO picks up substrates W from input/output ports I/O1, I/O2, moves them between the different process apparatus and delivers the substrates W to the loading bay LB of the lithographic apparatus LA. The devices in the lithocell, which are often also collectively referred to as the track, are typically under the control of a track control unit TCU that in itself may be controlled by a supervisory control system SCS, which may also control the lithographic apparatus LA, e.g. via lithography control unit LACU.

In order for the substrates W exposed by the lithographic apparatus LA to be exposed correctly and consistently, it is desirable to inspect substrates to measure properties of patterned structures, such as overlay errors between subsequent layers, line thicknesses, critical dimensions (CD), etc. For this purpose, inspection tools (not shown) may be included in the lithocell LC. If errors are detected, adjustments, for example, may be made to exposures of subsequent substrates or to other processing steps that are to be performed on the substrates W, especially if the inspection is done before other substrates W of the same batch or lot are still to be exposed or processed.

An inspection apparatus, which may also be referred to as a metrology apparatus, is used to determine properties of the substrates W, and in particular, how properties of different substrates W vary or how properties associated with different layers of the same substrate W vary from layer to layer. The inspection apparatus may alternatively be constructed to identify defects on the substrate W and may, for example, be part of the lithocell LC, or may be integrated into the lithographic apparatus LA, or may even be a stand-alone device. The inspection apparatus may measure the properties on a latent image (image in a resist layer after the exposure), or on a semi-latent image (image in a resist layer after a post-exposure bake step PEB), or on a developed resist image (in which the exposed or unexposed parts of the resist have been removed), or even on an etched image (after a pattern transfer step such as etching).

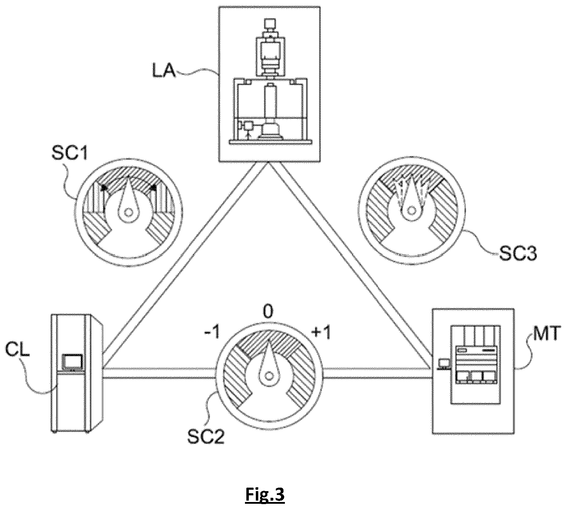

Typically the patterning process in a lithographic apparatus LA is one of the most critical steps in the processing which requires high accuracy of dimensioning and placement of structures on the substrate W. To ensure this high accuracy, three systems may be combined in a so called "holistic" control environment as schematically depicted in Fig. 3. One of these systems is the lithographic apparatus LA which is (virtually) connected to a metrology tool MT (a second system) and to a computer system CL (a third system). The key of such "holistic" environment is to optimize the cooperation between these three systems to enhance the overall process window and provide tight control loops to ensure that the patterning performed by the lithographic apparatus LA stays within a process window. The process window defines a range of process parameters (e.g. dose, focus, overlay) within which a specific manufacturing process yields a defined result (e.g. a functional semiconductor device) - typically within which the process parameters in the lithographic process or patterning process are allowed to vary.

The computer system CL may use (part of) the design layout to be patterned to predict which resolution enhancement techniques to use and to perform computational lithography simulations and calculations to determine which mask layout and lithographic apparatus settings achieve the largest overall process window of the patterning process (depicted in Fig. 3 by the double arrow in the first scale SC1). Typically, the resolution enhancement techniques are arranged to match the patterning possibilities of the lithographic apparatus LA. The computer system CL may also be used to detect where within the process window the lithographic apparatus LA is currently operating (e.g. using input from the metrology tool MT) to predict whether defects may be present due to e.g. sub-optimal processing (depicted in Fig. 3 by the arrow pointing "0" in the second scale SC2).

The metrology tool MT may provide input to the computer system CL to enable accurate simulations and predictions, and may provide feedback to the lithographic apparatus LA to identify possible drifts, e.g. in a calibration status of the lithographic apparatus LA (depicted in Fig. 3 by the multiple arrows in the third scale SC3).

In lithographic processes, it is desirable to make frequently measurements of the structures created, e.g., for process control and verification. Tools to make such measurement are typically called metrology tools MT. Different types of metrology tools MT for making such measurements are known, including scanning electron microscopes or various forms of scatterometer metrology tools MT. Scatterometers are versatile instruments which allow measurements of the parameters of a lithographic process by having a sensor in the pupil or a conjugate plane with the pupil of the objective of the scatterometer, measurements usually referred as pupil based measurements, or by having the sensor in the image plane or a plane conjugate with the image plane, in which case the measurements are usually referred as image or field based measurements. Such scatterometers and the associated measurement techniques are further described in patent applications US20100328655, US2011102753A1, US20120044470A, US20110249244, US20110026032 or EP1,628,164A, incorporated herein by reference in their entirety. Aforementioned scatterometers may measure gratings using light from soft x-ray and visible to near-IR wavelength range.

In a first embodiment, the scatterometer MT is an angular resolved scatterometer. In such a scatterometer reconstruction methods may be applied to the measured signal to reconstruct or calculate properties of the grating. Such reconstruction may, for example, result from simulating interaction of scattered radiation with a mathematical model of the target structure and comparing the simulation results with those of a measurement. Parameters of the mathematical model are adjusted until the simulated interaction produces a diffraction pattern similar to that observed from the real target.

In a second embodiment, the scatterometer MT is a spectroscopic scatterometer MT. In such spectroscopic scatterometer MT, the radiation emitted by a radiation source is directed onto the target and the reflected or scattered radiation from the target is directed to a spectrometer detector, which measures a spectrum (i.e. a measurement of intensity as a function of wavelength) of the specular reflected radiation. From this data, the structure or profile of the target giving rise to the detected spectrum may be reconstructed, e.g. by Rigorous Coupled Wave Analysis and non-linear regression or by comparison with a library of simulated spectra.

In a third embodiment, the scatterometer MT is an ellipsometric scatterometer. The ellipsometric scatterometer allows for determining parameters of a lithographic process by measuring scattered radiation for each polarization states. Such metrology apparatus emits polarized light (such as linear, circular, or elliptic) by using, for example, appropriate polarization filters in the illumination section of the metrology apparatus. A source suitable for the metrology apparatus may provide polarized radiation as well. Various embodiments of existing ellipsometric scatterometers are described in US patent applications 11/451,599, 11/708,678, 12/256,780, 12/486,449, 12/920,968, 12/922,587, 13/000,229, 13/033,135, 13/533,110 and 13/891,410 incorporated herein by reference in their entirety.

In one embodiment of the scatterometer MT, the scatterometer MT is adapted to measure the overlay of two misaligned gratings or periodic structures by measuring asymmetry in the reflected spectrum and/or the detection configuration, the asymmetry being related to the extent of the overlay. The two (typically overlapping) grating structures may be applied in two different layers (not necessarily consecutive layers), and may be formed substantially at the same position on the wafer. The scatterometer may have a symmetrical detection configuration as described e.g. in co-owned patent application EP1,628,164A, such that any asymmetry is clearly distinguishable. This provides a straightforward way to measure misalignment in gratings. Further examples for measuring overlay error between the two layers containing periodic structures as target is measured through asymmetry of the periodic structures may be found in PCT patent application publication no. WO 2011/012624 or US patent application US 20160161863, incorporated herein by reference in its entirety.

Other parameters of interest may be focus and dose. Focus and dose may be determined simultaneously by scatterometry (or alternatively by scanning electron microscopy) as described in US patent application US2011-0249244, incorporated herein by reference in its entirety. A single structure may be used which has a unique combination of critical dimension and sidewall angle measurements for each point in a focus energy matrix (FEM - also referred to as Focus Exposure Matrix). If these unique combinations of critical dimension and sidewall angle are available, the focus and dose values may be uniquely determined from these measurements.

A metrology target may be an ensemble of composite gratings, formed by a lithographic process, mostly in resist, but also after etch process for example. Typically the pitch and line-width of the structures in the gratings strongly depend on the measurement optics (in particular the NA of the optics) to be able to capture diffraction orders coming from the metrology targets. As indicated earlier, the diffracted signal may be used to determine shifts between two layers (also referred to 'overlay') or may be used to reconstruct at least part of the original grating as produced by the lithographic process. This reconstruction may be used to provide guidance of the quality of the lithographic process and may be used to control at least part of the lithographic process. Targets may have smaller sub-segmentation which are configured to mimic dimensions of the functional part of the design layout in a target. Due to this sub-segmentation, the targets will behave more similar to the functional part of the design layout such that the overall process parameter measurements resembles the functional part of the design layout better. The targets may be measured in an underfilled mode or in an overfilled mode. In the underfilled mode, the measurement beam generates a spot that is smaller than the overall target. In the overfilled mode, the measurement beam generates a spot that is larger than the overall target. In such overfilled mode, it may also be possible to measure different targets simultaneously, thus determining different processing parameters at the same time.

Overall measurement quality of a lithographic parameter using a specific target is at least partially determined by the measurement recipe used to measure this lithographic parameter. The term "substrate measurement recipe" may include one or more parameters of the measurement itself, one or more parameters of the one or more patterns measured, or both. For example, if the measurement used in a substrate measurement recipe is a diffraction-based optical measurement, one or more of the parameters of the measurement may include the wavelength of the radiation, the polarization of the radiation, the incident angle of radiation relative to the substrate, the orientation of radiation relative to a pattern on the substrate, etc. One of the criteria to select a measurement recipe may, for example, be a sensitivity of one of the measurement parameters to processing variations. More examples are described in US patent application US2016-0161863 and published US patent application US 2016/0370717A1incorporated herein by reference in its entirety.

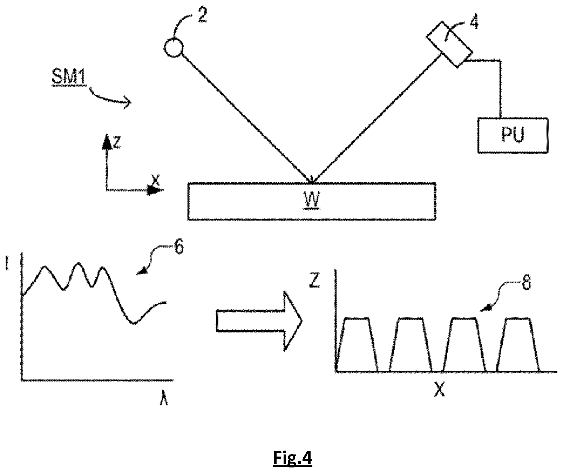

A metrology apparatus, such as a scatterometer, is depicted in Figure 4. It comprises a broadband (white light) radiation projector 2 which projects radiation onto a substrate W. The reflected or scattered radiation is passed to a spectrometer detector 4, which measures a spectrum 6 (i.e. a measurement of intensity as a function of wavelength) of the specular reflected radiation. From this data, the structure or profile giving rise to the detected spectrum may be reconstructed by processing unit PU, e.g. by Rigorous Coupled Wave Analysis and non-linear regression or by comparison with a library of simulated spectra as shown at the bottom of Figure 3. In general, for the reconstruction, the general form of the structure is known and some parameters are assumed from knowledge of the process by which the structure was made, leaving only a few parameters of the structure to be determined from the scatterometry data. Such a scatterometer may be configured as a normal-incidence scatterometer or an oblique-incidence scatterometer.

Overall measurement quality of a lithographic parameter via measurement of a metrology target is at least partially determined by the measurement recipe used to measure this lithographic parameter. The term "substrate measurement recipe" may include one or more parameters of the measurement itself, one or more parameters of the one or more patterns measured, or both. For example, if the measurement used in a substrate measurement recipe is a diffraction-based optical measurement, one or more of the parameters of the measurement may include the wavelength of the radiation, the polarization of the radiation, the incident angle of radiation relative to the substrate, the orientation of radiation relative to a pattern on the substrate, etc. One of the criteria to select a measurement recipe may, for example, be a sensitivity of one of the measurement parameters to processing variations. More examples are described in US patent application US2016/0161863 and published US patent application US 2016/0370717A1incorporated herein by reference in its entirety.

Another type of metrology tool used in IC manufacture is a topography measurement system, level sensor or height sensor. Such a tool may be integrated in the lithographic apparatus, for measuring a topography of a top surface of a substrate (or wafer). A map of the topography of the substrate, also referred to as height map, may be generated from these measurements indicating a height of the substrate as a function of the position on the substrate. This height map may subsequently be used to correct the position of the substrate during transfer of the pattern on the substrate, in order to provide an aerial image of the patterning device in a properly focus position on the substrate. It will be understood that "height" in this context refers to a dimension broadly out of the plane to the substrate (also referred to as Z-axis). Typically, the level or height sensor performs measurements at a fixed location (relative to its own optical system) and a relative movement between the substrate and the optical system of the level or height sensor results in height measurements at locations across the substrate.

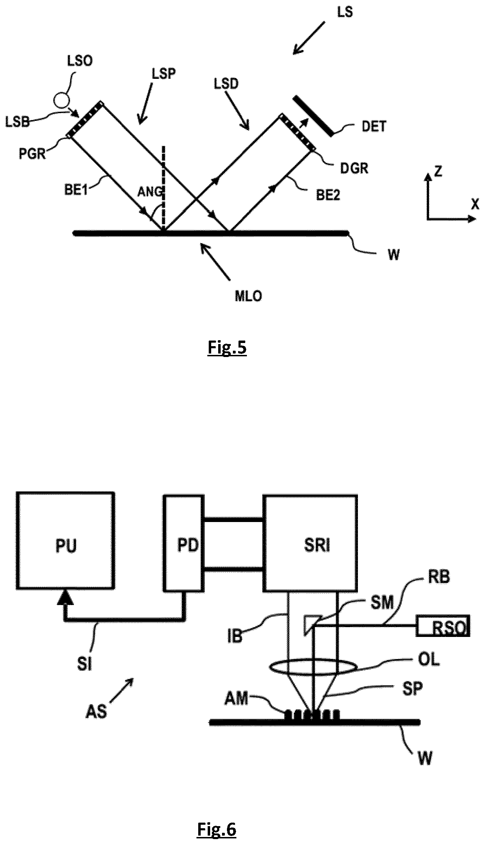

An example of a level or height sensor LS as known in the art is schematically shown in Figure 5, which illustrates only the principles of operation. In this example, the level sensor comprises an optical system, which includes a projection unit LSP and a detection unit LSD. The projection unit LSP comprises a radiation source LSO providing a beam of radiation LSB which is imparted by a projection grating PGR of the projection unit LSP. The radiation source LSO may be, for example, a narrowband or broadband light source, such as a supercontinuum light source, polarized or non-polarized, pulsed or continuous, such as a polarized or non-polarized laser beam. The radiation source LSO may include a plurality of radiation sources having different colors, or wavelength ranges, such as a plurality of LEDs. The radiation source LSO of the level sensor LS is not restricted to visible radiation, but may additionally or alternatively encompass UV and/or IR radiation and any range of wavelengths suitable to reflect from a surface of a substrate.

The projection grating PGR is a periodic grating comprising a periodic structure resulting in a beam of radiation BE1 having a periodically varying intensity. The beam of radiation BE1 with the periodically varying intensity is directed towards a measurement location MLO on a substrate W having an angle of incidence ANG with respect to an axis perpendicular (Z-axis) to the incident substrate surface between 0 degrees and 90 degrees, typically between 70 degrees and 80 degrees. At the measurement location MLO, the patterned beam of radiation BE1 is reflected by the substrate W (indicated by arrows BE2) and directed towards the detection unit LSD.

In order to determine the height level at the measurement location MLO, the level sensor further comprises a detection system comprising a detection grating DGR, a detector DET and a processing unit (not shown) for processing an output signal of the detector DET. The detection grating DGR may be identical to the projection grating PGR. The detector DET produces a detector output signal indicative of the light received, for example indicative of the intensity of the light received, such as a photodetector, or representative of a spatial distribution of the intensity received, such as a camera. The detector DET may comprise any combination of one or more detector types.

By means of triangulation techniques, the height level at the measurement location MLO can be determined. The detected height level is typically related to the signal strength as measured by the detector DET, the signal strength having a periodicity that depends, amongst others, on the design of the projection grating PGR and the (oblique) angle of incidence ANG.

The projection unit LSP and/or the detection unit LSD may include further optical elements, such as lenses and/or mirrors, along the path of the patterned beam of radiation between the projection grating PGR and the detection grating DGR (not shown).

In an embodiment, the detection grating DGR may be omitted, and the detector DET may be placed at the position where the detection grating DGR is located. Such a configuration provides a more direct detection of the image of the projection grating PGR.

In order to cover the surface of the substrate W effectively, a level sensor LS may be configured to project an array of measurement beams BE1 onto the surface of the substrate W, thereby generating an array of measurement areas MLO or spots covering a larger measurement range.

Various height sensors of a general type are disclosed for example in US7265364 and US7646471, both incorporated by reference. A height sensor using UV radiation instead of visible or infrared radiation is disclosed in US2010233600A1, incorporated by reference. In WO2016102127A1, incorporated by reference, a compact height sensor is described which uses a multi-element detector to detect and recognize the position of a grating image, without needing a detection grating.

Another type of metrology tool used in IC manufacture is an alignment sensor. A critical aspect of performance of the lithographic apparatus is therefore the ability to place the applied pattern correctly and accurately in relation to features laid down in previous layers (by the same apparatus or a different lithographic apparatus). For this purpose, the substrate is provided with one or more sets of marks or targets. Each mark is a structure whose position can be measured at a later time using a position sensor, typically an optical position sensor. The position sensor may be referred to as "alignment sensor" and marks may be referred to as "alignment marks".

A lithographic apparatus may include one or more (e.g. a plurality of) alignment sensors by which positions of alignment marks provided on a substrate can be measured accurately. Alignment (or position) sensors may use optical phenomena such as diffraction and interference to obtain position information from alignment marks formed on the substrate. An example of an alignment sensor used in current lithographic apparatus is based on a self-referencing interferometer as described in US6961116. Various enhancements and modifications of the position sensor have been developed, for example as disclosed in US2015261097A1. The contents of all of these publications are incorporated herein by reference.

Figure 6 is a schematic block diagram of an embodiment of a known alignment sensor AS, such as is described, for example, in US6961116, and which is incorporated by reference. Radiation source RSO provides a beam RB of radiation of one or more wavelengths, which is diverted by diverting optics onto a mark, such as mark AM located on substrate W, as an illumination spot SP. In this example the diverting optics comprises a spot mirror SM and an objective lens OL. The illumination spot SP, by which the mark AM is illuminated, may be slightly smaller in diameter than the width of the mark itself.

Radiation diffracted by the alignment mark AM is collimated (in this example via the objective lens OL) into an information-carrying beam IB. The term "diffracted" is intended to include zero-order diffraction from the mark (which may be referred to as reflection). A self-referencing interferometer SRI, e.g. of the type disclosed in US6961116 mentioned above, interferes the beam IB with itself after which the beam is received by a photodetector PD. Additional optics (not shown) may be included to provide separate beams in case more than one wavelength is created by the radiation source RSO. The photodetector may be a single element, or it may comprise a number of pixels, if desired. The photodetector may comprise a sensor array.

The diverting optics, which in this example comprises the spot mirror SM, may also serve to block zero order radiation reflected from the mark, so that the information-carrying beam IB comprises only higher order diffracted radiation from the mark AM (this is not essential to the measurement, but improves signal to noise ratios).

Intensity signals SI are supplied to a processing unit PU. By a combination of optical processing in the block SRI and computational processing in the unit PU, values for X- and Y-position on the substrate relative to a reference frame are output.

A single measurement of the type illustrated only fixes the position of the mark within a certain range corresponding to one pitch of the mark. Coarser measurement techniques are used in conjunction with this to identify which period of a sine wave is the one containing the marked position. The same process at coarser and/or finer levels may be repeated at different wavelengths for increased accuracy and/or for robust detection of the mark irrespective of the materials from which the mark is made, and materials on and/or below which the mark is provided. The wavelengths may be multiplexed and de-multiplexed optically so as to be processed simultaneously, and/or they may be multiplexed by time division or frequency division.

In this example, the alignment sensor and spot SP remain stationary, while it is the substrate W that moves. The alignment sensor can thus be mounted rigidly and accurately to a reference frame, while effectively scanning the mark AM in a direction opposite to the direction of movement of substrate W. The substrate W is controlled in this movement by its mounting on a substrate support and a substrate positioning system controlling the movement of the substrate support. A substrate support position sensor (e.g. an interferometer) measures the position of the substrate support (not shown). In an embodiment, one or more (alignment) marks are provided on the substrate support. A measurement of the position of the marks provided on the substrate support allows the position of the substrate support as determined by the position sensor to be calibrated (e.g. relative to a frame to which the alignment system is connected). A measurement of the position of the alignment marks provided on the substrate allows the position of the substrate relative to the substrate support to be determined.

Metrology tools MT, such as a scatterometer, topography measurement system, or position measurement system mentioned above may use radiation originating from a radiation source to perform a measurement. The properties of the radiation used by a metrology tool may affect the type and quality of measurements that may be performed. For some applications, it may be advantageous to use multiple radiation frequencies to measure a substrate, for example broadband radiation may be used. Multiple different frequencies may be able to propagate, irradiate, and scatter off a metrology target with no or minimal interference with other frequencies. Therefore different frequencies may for example be used to obtain more metrology data simultaneously. Different radiation frequencies may also be able to interrogate and discover different properties of a metrology target. Broadband radiation may be useful in metrology systems MT such as for example level sensors, alignment mark measurement systems, scatterometry tools, or inspection tools. A broadband radiation source may be a supercontinuum source.

High quality broadband radiation, for example supercontinuum radiation, may be difficult to generate. One method for generating broadband radiation may be to broaden high-power narrow band or single frequency input radiation or pump radiation, for example making use of non-linear, higher order effects. The input radiation (which may be produced using a laser) may be referred to as pump radiation. Alternatively, the input radiation may be referred to as seed radiation. To obtain high power radiation for broadening effects, radiation may be confined into a small area so that strongly localised high intensity radiation is achieved. In those areas, the radiation may interact with broadening structures and/or materials forming a non-linear medium so as to create broadband output radiation. In the high intensity radiation areas, different materials and/or structures may be used to enable and/or improve radiation broadening by providing a suitable non-linear medium.

In some implementations, the broadband output radiation is created in a photonic crystal fiber (PCF). In several embodiments, such a photonic crystal fiber has microstructures around its fiber core assisting in confining radiation that travels through the fiber in the fiber core. The fiber core can be made of a solid material that has non-linear properties and that is capable of generating broadband radiation when high intensity pump radiation is transmitted through the fiber core. Although it is feasible to generate broadband radiation in solid core photonic crystal fibers, there may be a few disadvantages of using a solid material. For example, if UV radiation is generated in the solid core, this radiation might not be present in the output spectrum of the fiber because the radiation is absorbed by most solid material.

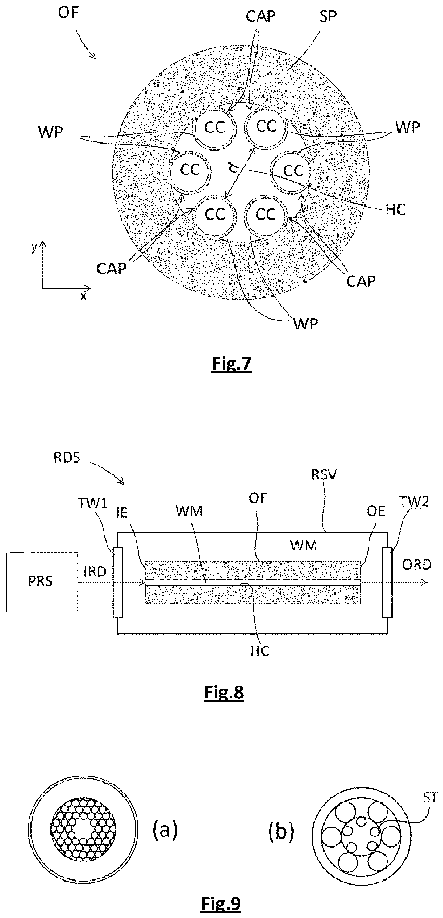

In some implementations, as discussed further below with reference to Figure 8, methods and apparatus for broadening input radiation may use a fiber for confining input radiation, and for broadening the input radiation to output broadband radiation. The fiber may be a hollow core fiber, and may comprise internal structures to achieve effective guiding and confinement of radiation in the fiber. The fiber may be a hollow core photonic crystal fiber (HC-PCF), which is particularly suitable for strong radiation confinement, predominantly inside the hollow core of the fiber, achieving high radiation intensities. The hollow core of the fiber may be filled with a gas acting as a broadening medium for broadening input radiation. Such a fiber and gas arrangement may be used to create a supercontinuum radiation source. Radiation input to the fiber may be electromagnetic radiation, for example radiation in one or more of the infrared, visible, UV, and extreme UV spectra. The output radiation may consist of or comprise broadband radiation, which may be referred to herein as white light.

Some embodiments relate to a new design of a broadband light source device comprising an optical fiber. The optical fiber is a hollow-core, photonic crystal fiber (HC-PCF). In particular, the optical fiber may be a hollow-core, photonic crystal fiber of a type comprising anti-resonant structures for confinement of radiation. Such fibers comprising anti-resonant structures are known in the art as anti-resonant fibers, tubular fibers, single-ring fibers, negative curvature fibers or inhibited coupling fibers. Various different designs of such fibers are known in the art. Alternatively, the optical fiber may be photonic bandgap fibers (HC-PBFs, for example a Kagome fiber).

A number of types of HC-PCFs can be engineered, each based on a different physical guidance mechanism. Two such HC-PCFs include: hollow-core photonic bandgap fibers (HC-PBFs) and hollow-core anti-resonant reflecting fibers (HC-ARFs). Detail on the design and manufacture of HC-PCFs can be found in US patent US2004/015085A1 (for HC-PBFs) and International PCT patent application WO2017/032454A1 (for Hollow Core anti-resonant reflecting fibers), which are incorporated herein by reference. Figure 9(a) shows a Kagome fiber, comprising a Kagome lattice structure.

An example of an optical fiber for use in the radiation source is now described with reference to Figure 7, which is a schematic cross sectional view of the optical fiber OF in a transverse plane. Further embodiments similar to the practical example of the fiber of Figure 7 are disclosed in WO2017/032454A1.

The optical fiber OF comprises an elongate body, which is longer in one dimension compared to the other two dimensions of the fiber OF. This longer dimension may be referred to as an axial direction and may define an axis of the optical fiber OF. The two other dimensions define a plane which may be referred to as a transverse plane. Figure 7 shows a cross-section of the optical fiber OF in this transverse plane (i.e. perpendicular to the axis), which is labelled as the x-y plane. The transverse cross-section of the optical fiber OF may be substantially constant along the fiber axis.

It will be appreciated that the optical fiber OF has some degree of flexibility and therefore the direction of the axis will not, in general, be uniform along the length of the optical fiber OF. The terms such as the optical axis, the transverse cross-section and the like will be understood to mean the local optical axis, the local transverse cross-section and so on. Furthermore, where components are described as being cylindrical or tubular these terms will be understood to encompass such shapes that may have been distorted as the optical fiber OF is flexed.

The optical fiber OF may have any length and it will be appreciated that the length of the optical fiber OF may be dependent on the application. The optical fiber OF may have a length between 1 cm and 10 m, for example, the optical fiber OF may have a length between 10 cm and 100 cm.

The optical fiber OF comprises: a hollow core HC; a cladding portion surrounding the hollow core HC; and a support portion SP surrounding and supporting the cladding portion. The optical fiber OF may be considered to comprise a body (comprising the cladding portion and the support portion SP) having a hollow core HC. The cladding portion comprises a plurality of anti-resonance elements for guiding radiation through the hollow core HC. In particular, the plurality of anti-resonance elements are arranged to confine radiation that propagates through the optical fiber OF predominantly inside the hollow core HC and to guide the radiation along the optical fiber OF. The hollow core HC of the optical fiber OF may be disposed substantially in a central region of the optical fiber OF, so that the axis of the optical fiber OF may also define an axis of the hollow core HC of the optical fiber OF.

The cladding portion comprises a plurality of anti-resonance elements for guiding radiation propagating through the optical fiber OF. In particular, in this embodiment, the cladding portion comprises a single ring of six tubular capillaries CAP. Each of the tubular capillaries CAP acts as an anti-resonance element.

The capillaries CAP may also be referred to as tubes. The capillaries CAP may be circular in cross section, or may have another shape. Each capillary CAP comprises a generally cylindrical wall portion WP that at least partially defines the hollow core HC of the optical fiber OF and separates the hollow core HC from a capillary cavity CC. It will be appreciated that the wall portion WP may act as an anti-reflecting Fabry-Perot resonator for radiation that propagates through the hollow core HC (and which may be incident on the wall portion WP at a grazing incidence angle). The thickness of the wall portion WP may be suitable so as to ensure that reflection back into the hollow core HC is generally enhanced whereas transmission into the capillary cavity CC is generally suppressed. In some embodiments, the capillary wall portion WP may have a thickness between 0.01 - 10.0 µm.

It will be appreciated that, as used herein, the term cladding portion is intended to mean a portion of the optical fiber OF for guiding radiation propagating through the optical fiber OF (i.e. the capillaries CAP which confine said radiation within the hollow core HC). The radiation may be confined in the form of transverse modes, propagating along the fiber axis.

The support portion is generally tubular and supports the six capillaries CAP of the cladding portion. The six capillaries CAP are distributed evenly around an inner surface of the inner support portion SP. The six capillaries CAP may be described as being disposed in a generally hexagonal formation.

The capillaries CAP are arranged so that each capillary is not in contact with any of the other capillaries CAP. Each of the capillaries CAP is in contact with the inner support portion SP and spaced apart from adjacent capillaries CAP in the ring structure. Such an arrangement may be beneficial since it may increase a transmission bandwidth of the optical fiber OF (relative, for example, to an arrangement wherein the capillaries are in contact with each other). Alternatively, in some embodiments, each of the capillaries CAP may be in contact with adjacent capillaries CAP in the ring structure.

The six capillaries CAP of the cladding portion are disposed in a ring structure around the hollow core HC. An inner surface of the ring structure of capillaries CAP at least partially defines the hollow core HC of the optical fiber OF. The diameter d of the hollow core HC (which may be defined as the smallest dimension between opposed capillaries, indicated by arrow d) may be between 10 and 1000 µm. The diameter d of the hollow core HC may affect the mode field diameter, impact loss, dispersion, modal plurality, and non-linearity properties of the hollow core HC optical fiber OF.

In this embodiment, the cladding portion comprises a single ring arrangement of capillaries CAP (which act as anti-resonance elements). Therefore, a line in any radial direction from a center of the hollow core HC to an exterior of the optical fiber OF passes through no more than one capillary CAP.

It will be appreciated that other embodiments may be provided with different arrangements of anti-resonance elements. These may include arrangements having multiple rings of anti-resonance elements and arrangements having nested anti-resonance elements. Figure 9(a) shows an embodiment of HC-PCFs with three rings of capillaries CAP stacking on top of each other along the radial direction. In this embodiment, each capillary CAP is in contact with other capillaries both in the same ring and in a different ring. Furthermore, although the embodiment shown in Figure 7 comprises a ring of six capillaries, in other embodiments, one or more rings comprising any number of anti-resonance elements (for example 4, 5, 6, 7, 8, 9, 10, 11 or 12 capillaries) may be provided in the cladding portion.

Figure 9(b) shows a modified embodiment of the above discussed HC-PCFs with a single ring of tubular capillaries. In the example of Figure 9(b) there are two coaxial rings of tubular capillaries 21. For holding the inner and outer rings of tubular capillaries 21, a support tube ST may be included in the HC-PCF. The support tube may be made of silica.

The tubular capillaries of the examples of Figure 7 and Figure 9(a) and 9(b) may have a circular cross-sectional shape. Other shapes are also possible for the tubular capillaries, like elliptical or polygonal cross-sections. Additionally, the solid material of the tubular capillaries of the examples of Figure 7 and Figure 9(a) and 9(b) may comprise plastic material, like PMA, glass, like silica, or soft glass.

Figure 8 depicts a broadband light source device RDS for providing broadband output radiation. The broadband light source device RDS comprises a pulsed pump radiation source PRS or any other type of source that is capable of generating short pulses of a desired length and energy level; an optical fiber OF (for example of the type shown in Figure 7) with a hollow core HC; and a working medium WM (for example a gas) disposed within the hollow core HC. Although in Figure 8 the radiation source RDS comprises the optical fiber OF shown in Figure 7, in alternative embodiments other types of hollow core HC optical fiber OF may be used.

The pulsed pump radiation source PRS is configured to provide input radiation IRD. The hollow core HC of the optical fiber OF is arranged to receive the input radiation IRD from the pulsed pump radiation source PRS, and broaden it to provide output radiation ORD. The working medium WM enables the broadening of the frequency range of the received input radiation IRD so as to provide broadband output radiation ORD.

The radiation source RDS further comprises a reservoir RSV. The optical fiber OF is disposed inside the reservoir RSV. The reservoir RSV may also be referred to as a housing, container or gas cell. The reservoir RSV is configured to contain the working medium WM. The reservoir RSV may comprise one or more features, known in the art, for controlling, regulating, and/or monitoring the composition of the working medium WM (which may be a gas) inside the reservoir RSV. The reservoir RSV may comprise a first transparent window TW1. In use, the optical fiber OF is disposed inside the reservoir RSV such that the first transparent window TW1 is located proximate to an input end IE of the optical fiber OF. The first transparent window TW1 may form part of a wall of the reservoir RSV. The first transparent window TW1 may be transparent for at least the received input radiation frequencies, so that received input radiation IRD (or at least a large portion thereof) may be coupled into the optical fiber OF located inside reservoir RSV. It will be appreciated that optics (not shown) may be provided for coupling the input radiation IRD into the optical fiber OF.

The reservoir RSV comprises a second transparent window TW2, forming part of a wall of the reservoir RSV. In use, when the optical fiber OF is disposed inside the reservoir RSV, the second transparent window TW2 is located proximate to an output end OE of the optical fiber OF. The second transparent window TW2 may be transparent for at least the frequencies of the broadband output radiation ORD of the apparatus 120.

Alternatively, in another embodiment, the two opposed ends of the optical fiber OF may be placed inside different reservoirs. The optical fiber OF may comprise a first end section configured to receive input radiation IRD, and a second end section for outputting broadband output radiation ORD. The first end section may be placed inside a first reservoir, comprising a working medium WM. The second end section may be placed inside a second reservoir, wherein the second reservoir may also comprise a working medium WM. The functioning of the reservoirs may be as described in relation to Figure 8 above. The first reservoir may comprise a first transparent window, configured to be transparent for input radiation IRD. The second reservoir may comprise a second transparent window configured to be transparent for broadband output broadband radiation ORD. The first and second reservoirs may also comprise a sealable opening to permit the optical fiber OF to be placed partially inside and partially outside the reservoir, so that a gas can be sealed inside the reservoir. The optical fiber OF may further comprise a middle section not contained inside a reservoir. Such an arrangement using two separate gas reservoirs may be particularly convenient for embodiments wherein the optical fiber OF is relatively long (for example when the length is more than 1 m). It will be appreciated that for such arrangements which use two separate gas reservoirs, the two reservoirs (which may comprise one or more features, known in the art, for controlling, regulating, and/or monitoring the composition of a gas inside the two reservoirs) may be considered to provide an apparatus for providing the working medium WM within the hollow core HC of the optical fiber OF.

In this context a window may be transparent for a frequency if at least 50%, 75%, 85%, 90%, 95%, or 99% of incident radiation of that frequency on the window is transmitted through the window.

Both the first TW1 and the second TW2 transparent windows may form an airtight seal within the walls of the reservoir RSV so that the working medium WM (which may be a gas) may be contained within the reservoir RSV. The gas WM may be contained within the reservoir RSV at the ambient pressure of the reservoir RSV (e.g. at an atmospheric pressure). It will be appreciated that the gas WM may be contained within the reservoir RSV at a pressure different to the ambient pressure of the reservoir RSV.

The working medium WM may comprise a noble gas such as Argon, Krypton, and Xenon, a Raman active gas such as Hydrogen, Deuterium and Nitrogen, or a gas mixture such as an Argon/Hydrogen mixture, a Xenon/Deuterium mixture, a Krypton/Nitrogen mixture, or a Nitrogen/Hydrogen mixture. Depending on the type of filling gas, the nonlinear optical processes can include modulational instability (MI), soliton self-compression, soliton fission, Kerr effect, Raman effect and dispersive wave generation (DWG), details of which are described in WO2018/127266A1 and US9160137B1 (both of which are hereby incorporated by reference). Since the dispersion of the filling gas can be tuned by varying the working medium WM pressure in the reservoir RSR (i.e. gas cell pressure), the generated broadband pulse dynamics and the associated spectral broadening characteristics can be adjusted so as to optimize the frequency conversion.

In one implementation, the working medium WM may be disposed within the hollow core HC at least during receipt of input radiation IRD for producing broadband output radiation ORD. It will be appreciated that, while the optical fiber OF is not receiving input radiation IRD for producing broadband output radiation, the gas WM may be wholly or partially absent from the hollow core HC.

In order to achieve frequency broadening high intensity radiation may be desirable. An advantage of having a hollow core HC optical fiber OF is that it may achieve high intensity radiation through strong spatial confinement of radiation propagating through the optical fiber OF, achieving high localised radiation intensities. The radiation intensity inside the optical fiber OF may be high, for example due to high received input radiation intensity and/or due to strong spatial confinement of the radiation inside the optical fiber OF. An advantage of hollow core optical fibers is that they can guide radiation having a broader wavelength range that solid-core fibers and, in particular, hollow core optical fibers can guide radiation in both the ultraviolet and infrared ranges.

An advantage of using a hollow core HC optical fiber OF may be that the majority of the radiation guided inside the optical fiber OF is confined to the hollow core HC. Therefore, the majority of the interaction of the radiation inside the optical fiber OF is with the working medium WM, which is provided inside the hollow core HC of the optical fiber OF. As a result, the broadening effects of the working medium WM on the radiation may be increased.

The received input radiation IRD may be electromagnetic radiation. The input radiation IRD may be received as pulsed radiation. For example, the input radiation IRD may comprise ultrafast pulses, for example, generated by a laser.

The input radiation IRD may be coherent radiation. The input radiation IRD may be collimated radiation, an advantage of which may be to facilitate and improve the efficiency of coupling the input radiation IRD into the optical fiber OF. The input radiation IRD may comprise a single frequency, or a narrow range of frequencies. The input radiation IRD may be generated by a laser. Similarly, the output radiation ORD may be collimated and/or may be coherent.

The broadband range of the output radiation ORD may be a continuous range, comprising a continuous range of radiation frequencies. The output radiation ORD may comprise supercontinuum radiation. Continuous radiation may be beneficial for use in a number of applications, for example in metrology applications. For example, the continuous range of frequencies may be used to interrogate a large number of properties. The continuous range of frequencies may for example be used to determine and/or eliminate a frequency dependency of a measured property. Supercontinuum output radiation ORD may comprise for example electromagnetic radiation over a wavelength range of 100 nm - 4000 nm. The broadband output radiation ORD frequency range may be for example 400 nm - 900 nm, 500 nm - 900 nm, or 200 nm - 2000 nm. The supercontinuum output radiation ORD may comprise white light.

The input radiation IRD provided by the pulsed pump radiation source PRS may be pulsed. The input radiation IRD may comprise electromagnetic radiation of one or more wavelengths between 200 nm and 2 µm. The input radiation IRD may for example comprise electromagnetic radiation with a wavelength of 1.03 µm.

The pulsed pump radiation source PRS may be a laser. The spatio-temporal transmission characteristics of such a laser pulse, e.g. its spectral amplitude and phase, transmitted along the optical fiber OF can be varied and tuned through adjustment of (pump) laser parameters, working component WM variations, and optical fiber OF parameters. Said spatio-temporal transmission characteristics may include one or more of: output power, output mode profile, output temporal profile, width of the output temporal profile (or output pulse width), output spectral profile, and bandwidth of the output spectral profile (or output spectral bandwidth). Said pulsed pump radiation source PRS parameters may include one or more of: pump wavelength, pump pulse energy, pump pulse width, pump pulse repetition rate. Said optical fiber OF parameters may include one or more of: optical fiber length, size and shape of the hollow core HC, size and shape of the capillaries, thickness of the walls of the capillaries surrounding the hollow core HC. Said working component WM, e.g. filling gas, parameters may include one or more of: gas type, gas pressure and gas temperature.

The broadband output radiation ORD provided by the radiation source RDS may have an average output power of at least 1 W. The average output power may be at least 5 W. The average output power may be at least 10 W. The broadband output radiation ORD may be pulsed broadband output radiation ORD. The broadband output radiation ORD may have a power spectral density in the entire wavelength band of the output radiation of at least 0.01 mW/nm. The power spectral density in the entire wavelength band of the broadband output radiation may be at least 3 mW/nm.

In the context of an alignment sensor, such as the example alignment sensor AS shown in Figure 6, it is desirable to increase the alignment mark scan speed.
This increased speed sets challenging requirements for its driving white-light source (e.g. the Radiation source RSO). In particular, to keep the signal-to-noise ratio of the detection path constant, 'fast' alignment scans (e.g., at several times faster scan speeds) have to collect the same amount of photons in a much shorter time than at conventional 'slow' scan speeds. At the same time, it is desirable to keep pulse-to-pulse fluctuations of the output intensity - referred to as "Relative Intensity Noise" (RIN) - suppressed as much as possible, to avoid deterioration in determining an aligned mark position due to the faster sampling and thus wider electronic detection bandwidth in fast alignment scans. As a result, the white-light generation mechanism of MI is unsuitable, despite its overall high output power.

In the context of a scatterometry sensor, such as the example scatterometry sensor SM1 as shown in Figure 4, the driving white-light source (e.g. the Radiation source RSO) is required to deliver a broadband spectrum with power spectral density values greater than at least a few milliwatt per nanometer bandwidth. To date, such high power spectral density PSD levels could only be produced using the spectral broadening process of modulational instability MI causing high pulse-to-pulse spectral fluctuations, but not using low-noise spectral broadening processes. This hampers usage of the same driving white-light source for both scatterometry and alignment.

The inventors have investigated solutions to address problems noted herein. In particular, they have investigated the use of femtosecond laser pulses which undergo spectral broadening while propagating inside a gas-filled HC-PCF. By exploiting the soliton self-compression (SSC) effect a coherent (essentially noise-free) spectral broadening of the pump pulse is achieved. Such techniques may have applications in a number of different apparatuses as described further herein.

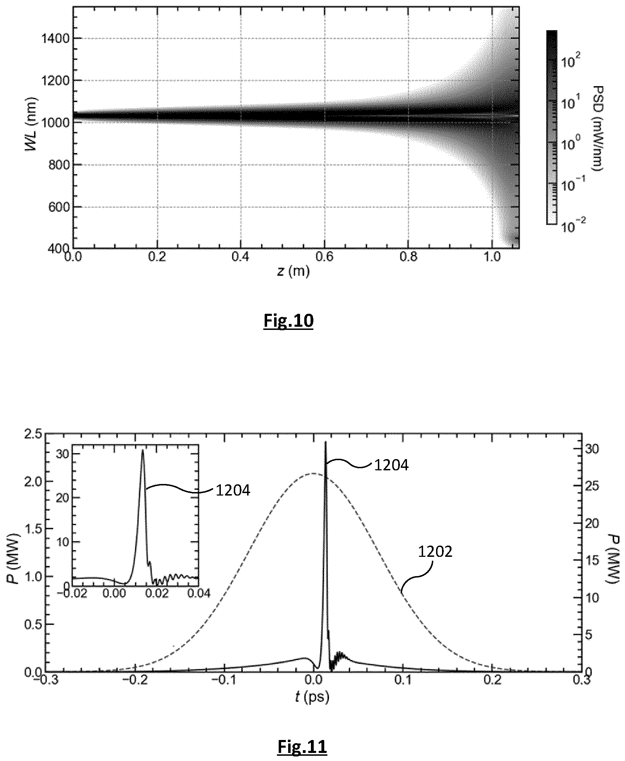

Figure 10 plots the numerically simulated spectral evolution of a single pulse undergoing SSC. For this plot, an input femtosecond pulse having an energy of 420 nJ being supplied to an untapered hollow core HC fiber filled with Krypton, was assumed.

For appropriately selected parameters of the working medium (e.g. gas pressure), and of the pulse of pump radiation (e.g. pump pulse energy and/or pulse duration) the pulse compresses exactly at the fiber output and features a single ultra-narrow spike (shown in Figure 11 at approximately 4 fs) atop of broad background of unconverted pump light.

Figure 11 illustrates the temporal shape of an input pulse 1202 supplied to the input end of the example untapered hollow core HC fiber of Figure 10, and further illustrates the temporal shape of the compressed pulse 1204 at the output of the example untapered hollow core HC fiber of Figure 10. The y-axis of Figure 11 represents the power of the respective pulses.

The spectrum of an optical pulse (e.g. with an initial Gaussian or sech shape) temporally compressed via SSC is given by the Fourier transform of the electric field in Figure 11 and thus typically has exponentially-decaying flanks (this is different to MI where the resulting spectrum is relatively flat). Depending on the configuration of the setup (incl. gas pressure), a dispersive wave may be generated in the blue part of the spectrum, whose power spectral density PSD characteristics significantly differ from the otherwise exponentially-decaying flank. However, the dispersive wave is a rather noisy part of the spectrum, typically not used for applications and therefore tuned to reside below the spectral range relevant to the sensor.

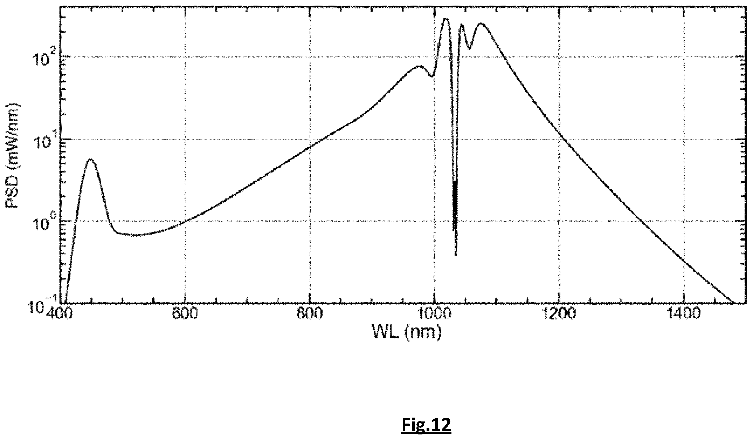

Figure 12 shows the optical spectrum of the radiation at the output of the example untapered hollow core HC fiber of Figure 10. As can be seen, SSC driven with a pump laser outputting pulses of pump radiation with 33 W average power having a centre wavelength of 1030 nm achieves minimum power spectral densities of ca 0.7 mW/nm, approximately six times lower than for MI at a slightly lower, but similar power of 30 W average power. This translates to conversion efficiencies (CE) of ca 6.9% for SSC (compared to 8.2% for MI) across the 500-to-900 nm spectral region, or of only ca 0.022% when a 10-nm wide band in the vicinity of the local PSD minimum (at ~520 nm) is considered (compared to 0.14% for MI).

As can be seen in Figure 12, the power spectral density PSD of the output radiation decreases as the wavelength (WL) moves away from the 1030 nm pump wavelength to a power spectral density "valley" (at around 520 nm) of ca 0.7 mW/nm which limits the conversion efficiency CE. The conversion efficiency CE may be defined as the ratio of the total power in a particular spectral range to the pump power at the pump wavelength (e.g. 1030 nm) at the input of the white-light-generating fiber. The particular spectral range can be the visible spectrum e.g. from 500 to 900 nm (CEₜₒₜₐₗ), or a sub band (CE_{band}) e.g. a 10 nm-wide spectral band.

The inventors have observed that power spectral density levels of several mW/nm (together with low noise) in the visible wavelength range cannot be generated using known SSC techniques. Using a pump radiation source offering higher average power and pulse energies, as well as shorter pulse duration, comes with a number of drawbacks. Firstly, a pump radiation source providing higher pump powers and shorter pulse durations typically requires sophisticated pulse compression modules (e.g., Heriott cells). In addition, a higher-power pump radiation source typically comes with increased volume, resulting in challenges in system integration. Secondly, coupling higher pump powers into the gas-filled HC-PCF generally causes larger thermal drifts that can lead to performance instabilities. Moreover, for higher-energy pulses at shorter duration, intensities at the fiber input become much higher. Thirdly, the power which cannot be used in the application (e.g. around the pump wavelength and IR), needs to be disposed of. Since there is no known efficient means to recycle this part of the spectrum, the wasted power is dissipated into heat that needs to be transported away from the mechanical frame of the apparatus. The high photon waste (lower limit is 100% - CEₜₒₜₐₗ = 93.1%) of SSC therefore requires complex cooling circuits.

The inventors have identified that at least part of a compressed (e.g. sub-10 fs long) SSC pulse may be used as a pump for further nonlinear effects in the very same HC-PCF as used for SSC, resulting in a compact integrated solution. It is shown numerically below, that with these methods the CE can be increased by 400-500 %.

In aspects of the present invention, at least one parameter of each of (i) the working medium WM, (ii) the pulses of pump radiation generated by the pulsed pump radiation source PRS, and (iii) the optical fiber OF are selected such that a pulse of pump radiation is spectrally broadened within the optical fiber OF based on SSC before being further spectrally broadened based on self-steepening. As is known to persons skilled in the art, self-steepening is a nonlinear effect in pulse propagation, leading to an increasingly steep trailing edge of the pulse. This steep gradient is responsible for significantly enhanced broadening of the shorter wavelengths in the generated supercontinuum.

The parameter(s) of the working medium WM may comprise a type of working medium WM. In embodiments whereby the type of working medium WM is a gas or gas mixture, the parameter(s) of the working medium WM may comprise one or more types of gas. In embodiments, the working medium WM may comprise a noble gas such as Argon, Krypton, Helium, Neon, and Xenon; a Raman active gas such as Hydrogen, Deuterium and Nitrogen; or a gas mixture such as an Argon/Hydrogen mixture, a Xenon/Deuterium mixture, a Krypton/Nitrogen mixture, a Nitrogen/Hydrogen mixture, or a gas mixture comprising Helium e.g. a gas mixture comprising Helium and possibly a Raman active gas. As noted above, the working medium WM may be contained within the reservoir RSV at a pressure different to the ambient pressure of the reservoir RSV.

In embodiments whereby the type of working medium WM is a gas or gas mixture, the parameter(s) of the working medium WM may comprise a gas pressure of the gas. The required gas pressure is dependent on the hollow core diameter d of the optical fiber OF. In particular, for optical fibers with larger hollow core diameters, a lower gas pressure is required (because the initial anomalous dispersion of the "unfilled" fiber gets weaker with increasing core diameter and needs less filling gas to counter-balance).

In embodiments whereby solely Helium is used as the working medium, the gas pressure may be in a range of 37 to 1370 bar for an optical fiber having a hollow core diameter d in a range of 20-100 µm, optionally in a range of 64 to 1370 bar for a hollow core diameter d in a range of 20-80 µm, further optionally in a range of 83 to 1370 bar for a hollow core diameter d in a range of 20-70 µm, and further optionally in a range of 108 to 1370 bar for a hollow core diameter d in a range of 20-60 µm.

In embodiments whereby solely Neon is used as the working medium, the gas pressure may be in a range of 20 to 1150 bar for an optical fiber having a hollow core diameter d in a range of 20-100 µm, optionally in a range of 31 to 1150 bar for a hollow core diameter d in a range of 20-80 µm, further optionally in a range of 42 to 1150 bar for a hollow core diameter d in a range of 20-70 µm, further optionally in a range of 65 to 1150 bar for a hollow core diameter d in a range of 20-60 µm.

In embodiments whereby solely Argon is used as the working medium, the gas pressure may be in a range of 1 to 64 bar for an optical fiber having a hollow core diameter d in a range of 20-100 µm, optionally in a range of 3 to 64 bar for a hollow core diameter d in a range of 20-80 µm, further optionally in a range of 4 to 64 bar for a hollow core diameter d in a range of 20-70 µm, further optionally in a range of 5 to 64 bar for a hollow core diameter d in a range of 20-60 µm.

In embodiments whereby solely Krypton is used as the working medium, the gas pressure may be in a range of 0.5 to 31 bar for an optical fiber having a hollow core diameter d in a range of 20-100 µm, optionally in a range of 1 to 31 bar for a hollow core diameter d in a range of 20-80 µm, further optionally in a range of 1.5 to 31 bar for a hollow core diameter d in a range of 20-70 µm, further optionally in a range of 2 to 31 bar for a hollow core diameter d in a range of 20-60 µm.

In embodiments whereby solely Xenon is used as the working medium, the gas pressure may be in a range of 0.3 to 14 bar for an optical fiber having a hollow core diameter d in a range of 20-100 µm, optionally in a range of 0.5 to 14 bar for a hollow core diameter d in a range of 20-80 µm, further optionally in a range of 0.7 to 14 bar for a hollow core diameter d in a range of 20-70 µm, further optionally in a range of 1 to 14 bar for a hollow core diameter d in a range of 20-60 µm.

Persons skilled in the art will be aware of techniques to calculate suitable gas pressure ranges for other types of gases and gas mixtures as a function of the hollow core diameter d in order to achieve the variations of group-velocity dispersion described herein.

The parameter(s) of the pulses of pump radiation IRD generated by the pulsed pump radiation source PRS may include one or more of: pump wavelength, pump pulse energy, pump pulse width (pulse duration), and pump pulse repetition rate. The pump wavelength (centre wavelength) of the input radiation may be 1030 nm. It will be appreciated that this is merely an example and the pump wavelength (centre wavelength) of the input radiation may be in a range of 700 nm - 2 µm. The pulses of pump radiation IRD may have a pulse energy of at least 100 nJ, optionally at least 200 nJ, optionally at least 400 nJ. The pulses of pump radiation IRD may have a pulse energy less than 1.5 µJ, optionally less than 1 µJ, optionally less than 0.5 µJ. The pulses of pump radiation IRD may have a pulse duration (e.g. a full-width half-maximum (FWHM) duration) of less than 200 fs, optionally less than 150 fs, further optionally less than 100 fs. The pulses of pump radiation IRD may have a pulse duration (e.g. a full-width half-maximum (FWHM) duration) of at least 10 fs, optionally at least 20 fs, optionally at least 30 fs. The repetition rate of the pulsed radiation pulses of pump radiation IRD may be of an order of magnitude of 1 kHz to 200 MHz. The soliton order of the pulses of pump radiation IRD may be less than 15.

The parameter(s) of the optical fiber OF (geometrical parameters) may include one or more of: a total length of the optical fiber OF, a length of one or more regions of the optical fiber OF, an outer diameter D_{fiber} of the optical fiber OF (e.g. a diameter of the support portion SP), and internal dimensions of the optical fiber OF. The internal dimensions of the optical fiber OF may include the hollow core diameter d, the arrangement of the capillaries, the thickness of the capillary wall portion WP, and/or the shape and dimensions (e.g. a diameter) of the capillaries.

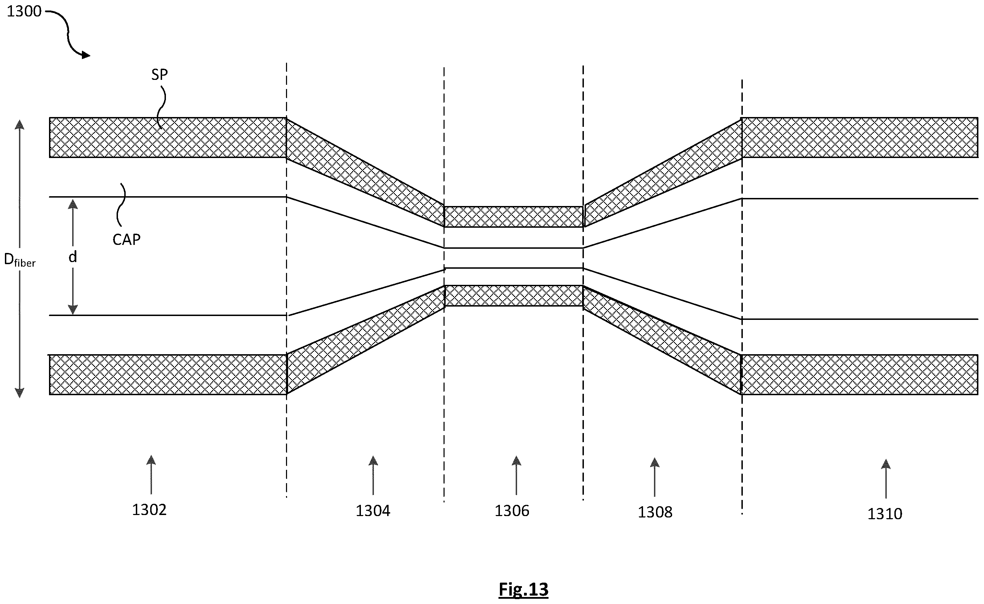

Figure 13 illustrates an optical fiber 1300 in accordance with embodiments of the invention. The optical fiber 1300 shown in Figure 13 is a hollow-core photonic crystal fiber, HC-PCF. As shown in Figure 13, the HC-PCF 1300 comprises a first region 1302. The first region 1302 comprises an input end of the HC-PCF 1300 which is arranged to receive pulses of pump radiation IRD output by the pulsed pump radiation source PRS. The first region 1302 of the HC-PCF 1300 has an outer diameter D_{fiber} and a hollow core diameter d. The diameter d of the hollow core HC in the first region 1302 may be in a range of 20-100 µm, optionally in a range of 20-80 µm, further optionally in a range of 20-70 µm, further optionally in a range of 20-60 µm.

The HC-PCF 1300 further comprises a second down-tapered region 1304, that is coupled to the first region 1302. That is, the output of the first region 1302 is coupled to the input of the second down-tapered region 1304. The diameter d of the hollow core HC in the second down-tapered region 1304 reduces over the length of the second down-tapered region 1304. It will be appreciated that one or more other geometrical fiber parameters, including example geometrical fiber parameters described herein (e.g. a diameter of the capillaries, thickness of the capillary wall portion WP, the outer diameter D_{fiber} of the optical fiber OF etc.), may also be scaled down over the second down-tapered region 1304. It will be appreciated that the scaling down of the one or more other geometrical fiber parameters may not be done in an identical manner (e.g. the exact same percentage reduction) to the scaling down of the diameter d of the hollow core HC. For example, the scaling down of the outer diameter D_{fiber} of the optical fiber OF may be scaled down over the second down-tapered region 1304 according to a different percentage reduction of the scaling down of the diameter d of the hollow core HC over the second down-tapered region 1304. The length of the second down-tapered region 1304 may be less than 10 cm, in one example less than 8 cm, in another example less than 6 cm, in another example less than 5 cm.

The HC-PCF 1300 further comprises a third region 1306 (which may also be referred to herein as a "waist region") that is coupled to the second down-tapered region 1304. That is, the output of the second down-tapered region 1304 is coupled to the input of the third region 1306. The diameter d of the hollow core HC in the waist region 1306 is less than the diameter d of the hollow core HC in the first region 1302. The diameter d of the hollow core HC in the waist region 1306 may be in a range of 15-80 µm. It will be appreciated that one or more other geometrical fiber parameters of the waist region 1306 may also be less than those geometrical fiber parameters in the first region 1302. The length of the waist region 1306 may be less than 8 cm, in another example less than 6cm, in another example less than 5cm. The length of the waist region 1306 may be in a range of 1-5 cm, optionally in a range of 2-4 cm.

The HC-PCF 1300 further comprises a fourth up-tapered region 1308, that is coupled to the waist region 1306. That is, the output of the third region 1306 is coupled to the input of the fourth up-tapered region 1308. The diameter d of the hollow core HC in the fourth up-tapered region 1308 increases over the length of the fourth up-tapered region 1308 such that the diameter d of the hollow core HC at the end of the fourth up-tapered region 1308 is greater than diameter d of the hollow core HC in the waist region 1306. It will be appreciated that one or more other geometrical fiber parameters, including example geometrical fiber parameters described herein (e.g. a diameter of the capillaries, thickness of the capillary wall portion WP, the outer diameter D_{fiber} of the optical fiber OF etc.), may also be scaled up over the fourth up-tapered region 1308. It will be appreciated that the scaling up of the one or more other geometrical fiber parameters may not be done in an identical manner (e.g. the exact same percentage increase) to the scaling up of the diameter d of the hollow core HC. For example, the scaling up of the outer diameter D_{fiber} of the optical fiber OF may be scaled up over the fourth up-tapered region 1308 according to a different percentage increase of the scaling up of the diameter d of the hollow core HC over the fourth up-tapered region 1308.

As shown in Figure 13, the diameter d of the hollow core HC at the end of the fourth up-tapered region 1308 may be the same as the diameter d of the hollow core HC in the first region 1302. Alternatively, the diameter d of the hollow core HC at the end of the fourth up-tapered region 1308 may be greater than, or less than, the diameter d of the hollow core HC in the first region 1302.

As shown in Figure 13, the length of the waist region 1306 may be less than the length of the second down-tapered region 1304 and/or the length of the fourth up-tapered region 1308. The length of the fourth up-tapered region 1308 may be less than 10 cm, in one example less than 8 cm, in another example less than 6cm, in another example less than 5cm. In other embodiments, the length of the waist region 1306 may be greater than the length of the second down-tapered region 1304 and/or the length of the fourth up-tapered region 1308.

In some embodiments (not shown in Figure 13), the fourth up-tapered region 1308 may comprise an output end of the HC-PCF 1300.

In other embodiments (shown in Figure 13), the fourth up-tapered region 1308 is coupled to a fifth region 1310 whereby the fifth region 1310 comprises the output end of the HC-PCF 1300. That is, the output of the fourth up-tapered region 1308 is coupled to the input of the fifth region 1310. The diameter d of the hollow core HC in the waist region 1306 is less than the diameter d of the hollow core HC in the fifth region 1310. As shown in Figure 13, the diameter d of the hollow core HC in the fifth region 1310 may be the same as the diameter d of the hollow core HC in the first region 1302. Alternatively, the diameter d of the hollow core HC in the fifth region 1310 may be greater than, or less than, the diameter d of the hollow core HC in the first region 1302. The length of the fifth region 1310 may be less than 10 cm.

The total length of the HC-PCF 1300 may be in a range of 10-1000 cm.

The physical tapering of the HC-PCF 1300 occurs towards the end of the HC-PCF 1300. That is, the length of the first region 1302 may be greater than the length of any of the other regions of the HC-PCF 1300. The length of the first region 1302 may be greater than a combination of one or more of the remaining regions of the HC-PCF 1300. The length of the first region 1302 may be greater than a combined length of all of the remaining regions of the HC-PCF 1300. The length of the first region 1302 may be in a range of 5-995 cm.

The at least one parameter of each of (i) the working medium WM, (ii) the pulses of pump radiation generated by the pulsed pump radiation source PRS, and (iii) the HC-PCF 1300 are selected such that a pulse of pump radiation is spectrally broadened within the HC-PCF 1300 in the first region 1302, the second down-tapered region 1304, and the waist region 1306 based on SSC, before being further spectrally broadened based on self-steepening in the fourth up-tapered region 1308 and the fifth region 1310 (if present).

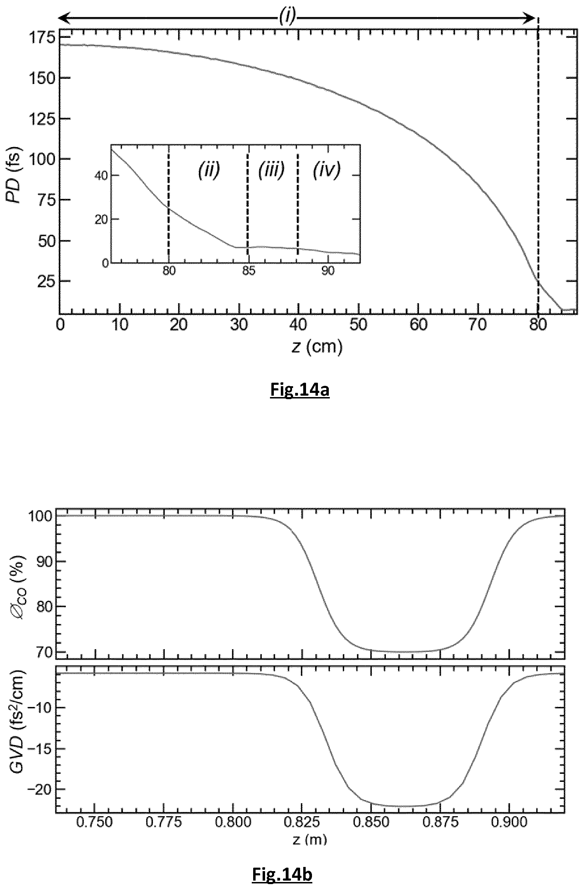

Figure 14a illustrates the full-width half-maximum (FWHM) duration of a pulse as it propagates through an illustrated example HC-PCF according to embodiments of the invention having a total length of 92 cm which includes a 80cm long first region 1302 shown as section (i), a ~5cm long second down-tapered region 1304 shown as section (ii), a ~3cm long waist region 1306 shown as section (iii), and a ~4cm long region up-tapered region 1308 shown as section (iv). The y-axis of Figure 14a represents the pulse duration (PD) in femtoseconds (fs), and the x-axis of Figure 14a represents the position along the example HC-PCF from the input end. In the example shown in Figures 14a and 14b, Krypton was used as the working medium WM at approximately 62% higher pressure than the pressure used for the working medium WM in the untapered hollow core HC fiber to generate the plot shown in Figure 10.

The upper waveform of Figure 14b shows exemplarily the variation of the diameter d of the hollow core HC at the end of the first region 1302, the second down-tapered region 1304, the waist region 1306, and the up-tapered region 1308 in the example HC-PCF of Figure 14a. The y-axis of the top waveform Figure 14b represents the diameter d of the hollow core HC, shown as Ø_{CO}, normalized with reference to the diameter d of the untapered hollow core HC used to generate the plot shown in Figure 10. The lower waveform of Figure 14b shows exemplarily the variation of group-velocity dispersion (GVD) at the end of the first region 1302, the second down-tapered region 1304, the waist region 1306, and the up-tapered region 1308 in the example HC-PCF of Figure 14a. The x-axis of Figure 14a represents the position along the example HC-PCF from the input end.

SSC reduces the pulse duration of an input pulse of pump radiation IRD (output by the pump radiation source PRS) in the same way as in an untapered fiber along the first region 1302, the second down-tapered region 1304, and the waist region 1306 of the example HC-PCF of Figures 14a and 14b. In an untapered fiber the shortest pulse duration would be expected after approximately 106 cm length). However, in embodiments of the present invention the strongest compression happens already after a shorter length. This is illustrated in Figure 14a whereby an input pulse of pump radiation IRD having a pulse duration of approximately 170 fs is compressed within the first region 1302 to have a pulse duration of approximately 25 fs at the input of the second down-tapered region 1304. In embodiments, the at least one parameter of each of (i) the working medium WM, (ii) the pulses of pump radiation generated by the pulsed pump radiation source PRS, and (iii) the HC-PCF 1300 may be selected such that a pulse duration of an input pulse is reduced (i.e. compressed) such that the pulse duration of the pulse at the input of the second down-tapered region 1304 is at least 50% less than the pulse duration of the input pulse, optionally at least 60% less than the pulse duration of the input pulse, optionally at least 70% less than the pulse duration of the input pulse, optionally at least 80% less than the pulse duration of the input pulse, optionally at least 90% less than the pulse duration of the input pulse.

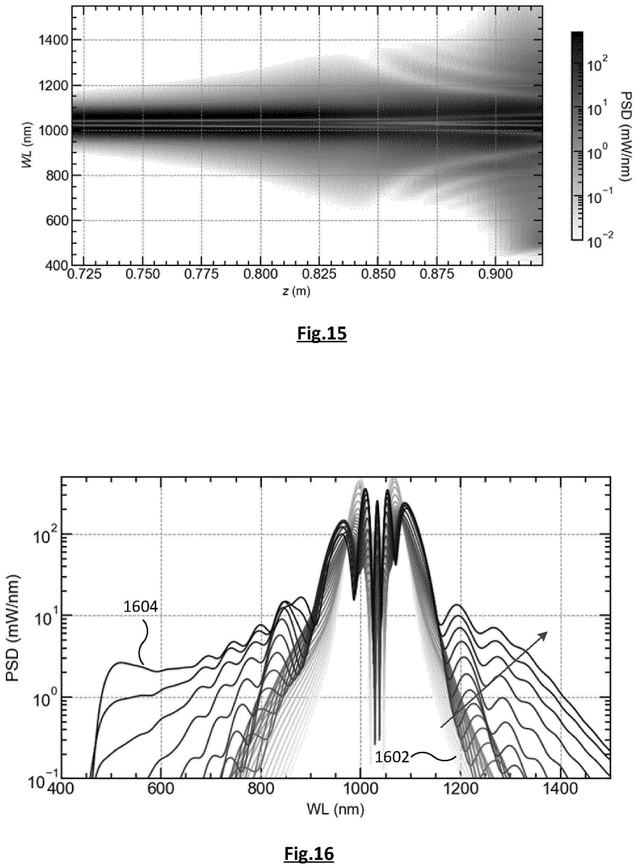

The gradual increase in intensity, nonlinearity and anomalous dispersion within the second down-tapered region 1304 (in which all geometrical fiber parameters may be linearly down-scaled by for example by 30%) allows the compression (to ~7.2 fs at the output of the second down-tapered region 1304) to be reached after only approximately 84 cm, at the point at which the waist region 1306 core diameter is reached. This is illustrated in Figure 15, which shows the spectral evolution of a pulse of pump radiation as it propagates along the length of the example HC-PCF shown in Figures 14a and 14b.

Unlike in pure SSC, where the pulse duration would quickly increase again after the compression due to splitting of the soliton into lower-order solitons ("soliton fission") and their subsequent interference, additional spectral broadening, particularly towards short wavelengths, is observed over the course of the fourth up-tapered region 1308. This is illustrated in Figure 16, which shows power spectra at several positions selected as lineouts of Figure 15 (at increasing lengths along the fiber as indicated by the arrow). Curve 1602 shows the power spectra 0.74 m along the example HC-PCF, and curve 1604 shows the power spectra at the end of the 0.92 m example HC-PCF. A significant PSD enhancement at wavelengths of approximately 500-600 nm is observed for the curves which correspond to the power spectra at positions along the example HC-PCF after the fourth up-tapered region 1308.

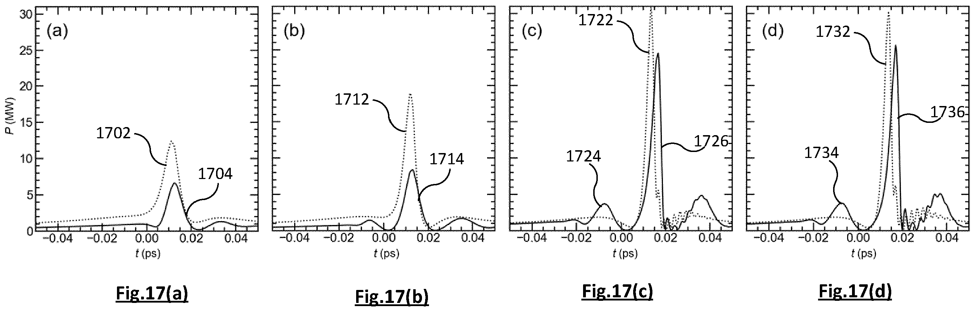

To uncover the underlying mechanism of this, the instantaneous intensity (P) of the pulse of pump radiation is plotted on the y-axis in Figures 17(a)-(d) as a function of intra-pulse time at several locations along the fiber including at the compression point at the end of the second down-tapered region 1304 (shown in Figure 17(a)), at the end of the waist region 1306 (shown in Figure 17(b)), at the end of the fourth up-tapered region 1308 (shown in Figure 17(c)), and at the end of the fifth region 1310 i.e. at the end of the example HC-PCF, (shown in Figure 17(d)).

In the example HC-PCF shown in Figures 14a and 14b, the end of the second down-tapered region 1304 is at 92.5% of the total length of the HC-PCF, the end of the waist region 1306 is at 95% of the total length of the HC-PCF, and the end of the fourth up-tapered region 1308 is at 99% of the total length of the HC-PCF.

In Figures 17(a)-(d) curves 1704, 1714, 1724, and 1734 represent the temporal profile of optical power of a pulse propagating through the example HC-PCF shown in Figures 14a and 14b. In

Figures 17(a)-(d) curves 1702, 1712, 1722, and 1732 represent the temporal profile of optical power of a pulse undergoing pure SSC in an approximately 106cm long untapered fiber, for the same relative positions along the fiber.

From both Figure 17(c) and Figure 17(d) a significant self-steepening of the trailing edge of the pulse can be observed after the end of the fourth up-tapered region 1308 - this is a characteristic feature in presence of unusually strong self-phase modulation that is driven here by the broadband precompressed SSC pulse. The trailing edge (1726, 1736) of the pulse is defined as the pulse edge with falling instantaneous intensity.

To simulate the pulse propagation along the gas-filled hollow-core fiber, it is possible to use the so-called "Generalized Nonlinear Schrödinger Equation" which governs the evolution of the slowly-varying scaled electric field envelope E(z,t): $\frac{\partial }{\partial z} E \left(z, τ\right) = j \left(β-{β}_{0}-{jβ}_{1}\frac{\partial }{\partial τ}\right) E \left(z, τ\right) + jγ \left(1+j\frac{1}{{ω}_{0}}\frac{\partial }{\partial τ}\right) \left[{\left|E\left(z, τ\right)\right|}^{2}E\left(z, τ\right)\right] ,$
where j is the imaginary unit,
( ) = ω/c *n(*ω) is the frequency-dependent propagation constant (β₀: evaluated at the pump frequency ω₀),
*n(*ω) is the frequency-dependent refractive index,
β₁ is the inverse group velocity (1/*v_{g}*),
c is the speed of light,
   *= n₂* ω₀ /(c A_{eff}) is the nonlinear coefficient,
*n₂* is the nonlinear refractive index of the filling gas,
*A_{eff}* is the effective mode area, and
the optical intensity is given as *I =* |*E(*z,t)|² /A_{eff}.

The temporal derivative in the nonlinear term (rightmost in equation (1)) is known as "shock", responsible for the self-steepening effect. Applying the derivative and re-arranging the resulting terms shows indeed that the group velocity can now be considered intensity-dependent: ${v}_{g} = {\left({β}_{1}+{n}_{2}∗I/c\right)}^{- 1}$

The self-steepening is a direct consequence of equation (2) which indicates that the high-intensity part of the pulse (i.e., the peak) travels at a slower group velocity, causing a sharper trailing edge with a growing intensity gradient. At the same time, it is also known that at the self-steepening trailing edge of the pulse the blue-shifted part of the broadband spectrum is generated. This matches the inventors observation that most of the spectral broadening after the SSC compression point at the end of the second down-tapered region 1304 occurs in the visible, not the IR part of the spectrum.

It can be seen from the curves 1702, 1712, 1722, and 1732 in Figures 17(a)-(d) that no self-steepening is seen for the pulse undergoing pure SSC in the untapered fiber.

In embodiments of the present invention, at least one parameter of each of (i) the working medium, (ii) the pulse of pump radiation, and (iii) the regions of the HC-PCF, are selected such that a group-velocity dispersion at a central frequency (ω₀) of the pulse in the waist region 1306 is anomalous, i.e. negative group-velocity dispersion (β₂).

The pulse may exhibit anomalous group-velocity dispersion (GVD) in each of the first region 1302, the second down-tapered region 1304, the waist region 1306, the fourth up-tapered region 1308, and the fifth region 1310 (if present). In the example HC-PCF shown in Figures 14a and 14b, the GVD in the first region 1302 and the fifth region 1310 was -5.81 fs²/cm, ultimately reaching -22.0 fs²/cm in the waist region 1306. That is, the at least one parameter of each of (i) the working medium, (ii) the pulse of pump radiation, and (iii) the regions of the HC-PCF, may be selected such that the pulse exhibits the strongest anomalous GVD in the waist region 1306, and stronger anomalous GVD in the second down-tapered region 1304 and fourth up-tapered region 1308 than in the first region 1302 and fifth region 1310.

Even though the negative sign in ₂ is required to enable any kind of soliton dynamics, the at least one parameter of each of (i) the working medium, (ii) the pulse of pump radiation, and (iii) the regions of the HC-PCF, may be selected such that the pulse exhibits slightly positive group velocity dispersion in the first region 1302, provided that the pulse exhibits negative group velocity dispersion in the waist region 1306.

In embodiments of the present disclosure, the length of any region of the HC-PCF 1300 is selected to be shorter than a respective pulse break-up length *L*_{br}. The pulse breakup length *L*_{br} is defined as the hollow-core fiber length after which cascaded Modulational Instability (MI) sidebands appear in the optical spectrum. In particular, the pulse break-up length *L*_{br} can be considered as the minimum fiber length at which the MI process becomes fully observable, thus SSC only occurs in a region of the fiber if the length of the region is << *L*_{br}. In "Extreme nonlinear optics in gas-filled hollow-core fibres" by Francesco Tani, the pulse breakup length *L*_{br} was empirically found to be 15 times the nonlinear length *L*ₙₒₙₗᵢₙ: 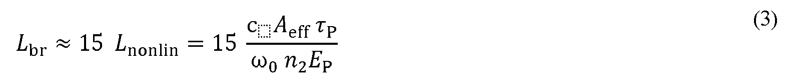 Where:
c: speed of light,
   ₀: pump wavelength,
*A*_{eff}: effective mode area,
*n*₂: nonlinear refractive index,
*E*_{P}: energy,
   _{P}: full-width half-max. pulse duration

The nonlinear length *L*ₙₒₙₗᵢₙ itself is also a characteristic length scale that describes the strength of the Self-Phase Modulation due to the Kerr effect: over 1 nonlinear length, a pulse acquires a nonlinear phase of 1 rad.

In embodiments of the present disclosure, the parameter(s) of each of (i) the working medium, (ii) the pulse of pump radiation, and (iii) the regions of the HC-PCF, are selected to provide a value of *L*ₙₒₙₗᵢₙ for the first region 1302, which results in a value for the pulse breakup length *L*_{br} (using equation 3) that causes MI not to occur in the HC-PCF. The nonlinear length *L*ₙₒₙₗᵢₙ becomes approximately 3-4 times shorter in the second down-tapered region 1304 and the waist region 1306 as both pulse duration _{P} and effective mode area A_{eff} shrink.

The parameter(s) of each of (i) the working medium, (ii) the pulse of pump radiation, and (iii) the regions of the HC-PCF, may be selected such that the soliton order of the pulse remains less than 15 as the pulse propagates along the length of one or more regions (for example the entire length of the HC-PCF). This advantageously prevents any modulational instability (MI) processes occurring. The soliton order of the pulse may be greater than 3 (to achieve significant compression) as the pulse propagates along the length of one or more regions (for example the entire length of the HC-PCF).

The soliton order N for an untapered fiber, which predominantly dictates a "compression factor" (i.e., a ratio of input pulse duration to output pulse duration), can be calculated according to: ${N}^{2} = γ \left({ω}_{0}\right) {P}_{0} {\left({τ}_{P}/\left(4 ln \left(2\right.\right)\right)}^{2} / \left|{β}_{2}\left({ω}_{0}\right)\right|$ where:
N: soliton order
   (ω₀) = *n₂* ω₀ /(c A_{eff}) is the nonlinear coefficient,
P₀: peak power
   _{P}: full-width half-max. pulse duration
   ₂( ): group-velocity dispersion at a central frequency ω₀
It will be appreciated that these individual parameters have an implicit dependence on the diameter d of the hollow core, the type of gas that fills the fiber and the pressure of the gas. The parameters are to be adjusted so that a compression length of the fiber L can be defined as: $L = \left(1/\left(2N\right)+1.7/{N}^{2}\right) ∗ {\left({τ}_{p}/\left(4 ln2\right)\right)}^{2} / \left|{β}_{2}\right|$ where:
N: soliton order
   ₚ: full-width half-max. pulse duration
   _{2:} group-velocity dispersion at a central frequency (ω₀)
L: compression length which is defined as the length after which a pulse undergoing (pure) SSC is shortest in duration (and thus possesses its broadest spectrum).

In general, for an untapered fiber equation (5) can be used to estimate the full fiber length required for pure SSC to complete. For the HC-PCF 1300 according to embodiments of the present disclosure, where parameters are adjusted to compress the pulse before the output of the waist region 1306 (section (iii)) and where the first region 1302 (section (i)) is typically the longest region, equation (5) can still be used to provide an estimate of the compression length. Furthermore, simulations can be used to directly determine the compression length. For example, fine-adjustment of the input energy of the input pulse of pump radiation IRD can bring the compression length to a desired location.

Persons skilled in the art will appreciate that the soliton order may be computed on a per-region basis for the HC-PCF 1300 according to embodiments of the present disclosure. In particular, it will be appreciated that computing the soliton order for the second down-tapered region 1304 or the fourth up-tapered region 1308 may be performed using averaged (e.g. mean) quantities (particularly of GVD, nonlinearity).

As noted above, the diameter d of the hollow core HC in the second down-tapered region 1304 reduces over the length of the second down-tapered region 1304, and the diameter d of the hollow core HC in the fourth up-tapered region 1308 increases over the length of the fourth up-tapered region 1308. In embodiments of the present disclosure, the rate of hollow-core diameter change in these transitions may be sufficiently small to exhibit adiabatic propagation in the fundamental optical mode and exclude coupling to higher-order optical modes. That is, one or both of the second down-tapered region 1304 and the fourth up-tapered region 1308 may be tapered in an adiabatic manner such that propagation of the fundamental mode is (e.g. substantially) maintained through the tapered fiber.

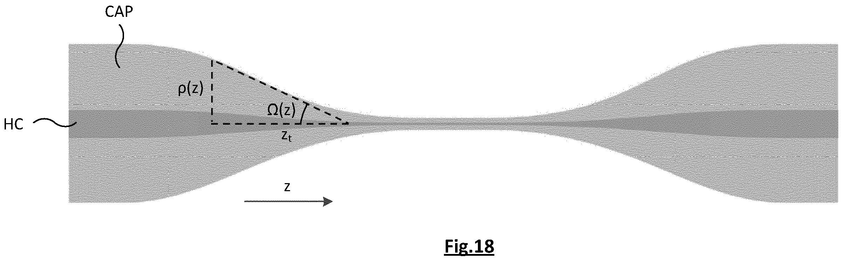

Figure 18 illustrates a taper angle in a HC-PCF. The taper angle is related to the core-diameter slope via: $Ω \left(z\right) = {tan}^{- 1} \left(\frac{\partial ρ \left(z\right)}{\partial z}\right) \approx \frac{\partial ρ \left(z\right)}{\partial z}$

A taper is adiabatic (i.e., avoids excitation of parasitic lossy higher-order modes) if the taper angle W(z) < Wₘₐₓ(z): ${Ω}_{max} \left(z\right) = \frac{ρ \left(z\right)}{2 π} \left[{β}_{FM}-{β}_{HOM}\right] ∗ F = \frac{ρ \left(z\right)}{λ} \left({n}_{FM}-{n}_{HOM}\right) = \frac{ρ \left(z\right)}{λ} {Δn}_{eff}$
where ${β}_{FM / HOM} = \frac{ω}{c} {n}_{FM / HOM}$ is the propagation constant of the fundamental (FM) or higher-order optical mode (HOM),
*ω* = 2*πf* is the angular frequency of the light,
n_{FM}/n_{HOM}(ω) are the effective mode indices of the FM/HOM,
c is the speed of light,
F is a non-dimensional factor (which may be empirically determined, e.g. to approximately 0.5).
If this adiabaticity criterion is not met, power is transferred from the fundamental to a lossy higher-order optical mode.

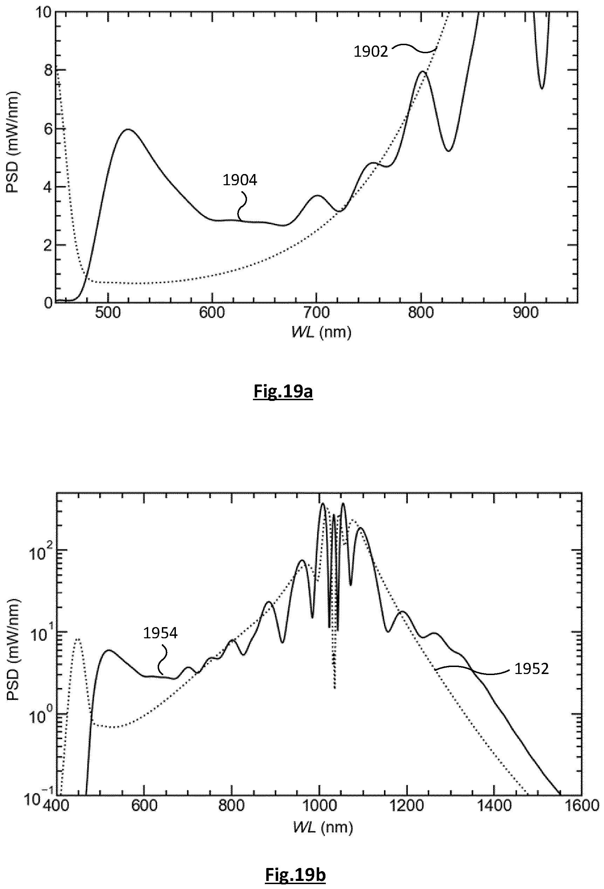

Figure 19a shows a linear scale plot of the simulated spectrum 1902 of PSD obtained at the end of the approximately 106cm long untapered fiber in which a radiation pulse undergoes pure SSC, and a linear scale plot of the simulated spectrum 1904 of PSD obtained at the end of the example HC-PCF shown in Figures 14a and 14b, with the same pulse energy (of approximately 420 nJ) and the same pump pulse repetition rate.

Figure 19b shows a logarithmic scale plot of the simulated spectrum 1952 of PSD obtained at the end of the approximately 106cm long untapered fiber in which a radiation pulse undergoes pure SSC, and a linear scale plot of the simulated spectrum 1954 of PSD obtained at the end of the example HC-PCF shown in Figures 14a and 14b, with the same pulse energy (of approximately 420 nJ) and the same pump pulse repetition rate.

The example HC-PCF shown in Figures 14a and 14b demonstrates a 314% higher PSD in the vicinity of the (critical) local PSD minimum (for pure SSC 0.7 mW/nm located at ~500 nm, for the taper-enhanced spectral broadening 2.9 mW/nm located at ~590 nm).

The conversion efficiency to the 500-900 nm spectral region, CEₜₒₜₐₗ, increases from 6.9 to ~7.2% with the fiber-tapering. The benefit of the fiber-tapering in accordance with embodiments of the present invention on the conversion efficiency is visualized more clearly for a 10-nm-wide band centered at 532 nm, whereby CE_{band} increases from only 0.022% to 0.17% - an increase of more than 600%.

Whilst in the example of Figures 14a and 14b, Krypton was used as the working medium WM, it will be appreciated that this is merely an example. It will be appreciated that when heavier gases are used, lower pressures are required to produce the same GVD. When geometrical fiber parameters are linearly scaled down/up by 30% in the second down-tapered region 1304 and the fourth up-tapered region 1308 respectively, the inventors have observed that a GVD of -22.0 fs²/cm (which was observed in the waist region 1306 in the example HC-PCF shown in Figures 14a and 14b) can be achieved using an approximately 52x higher Helium pressure, approximately 27x higher Neon pressure, approximately 3x higher Argon pressure, or approximately 43% lower Xenon pressure, than in the untapered hollow core HC fiber used to generate the plot shown in Figure 10.

Whilst we have described that one or more geometrical fiber parameters may be linearly scaled down/up by 30% in the second down-tapered region 1304 and the fourth up-tapered region 1308 respectively, this is merely an example. In embodiments, one or more geometrical fiber parameters may be linearly scaled down/up by up to 50% in the second down-tapered region 1304 and the fourth up-tapered region 1308 respectively. In an example whereby the geometrical fiber parameters are linearly scaled down/up by 50% in the second down-tapered region 1304 and the fourth up-tapered region 1308 respectively, the inventors have observed that a GVD of -22.0 fs²/cm (which was observed in the waist region 1306 in the example HC-PCF shown in Figures 14a and 14b) can be achieved using an approximately 571x higher Helium pressure, an approximately 285x higher Neon pressure, an approximately 31x higher Argon pressure, an approximately 9x higher Krypton pressure, or approximately 7x higher Xenon pressure than in the untapered hollow core HC fiber used to generate the plot shown in Figure 10. Persons skilled in the art will appreciate that an upper bound for the pressure of the gas will be dictated by the pressure at which the zero-dispersion wavelength hits the pump wavelength (e.g. of 1030 nm) so that the dispersion is no longer anomalous and neither MI nor SSC can occur.

Whilst the outer diameter D_{fiber} of the HC-PCF is shown in Figure 13 as being tapered in the second down-tapered region 1304 and the fourth up-tapered region 1308, in other embodiments, the outer diameter D_{fiber} of the HC-PCF may not taper and be (e.g. substantially) constant along the length of the HC-PCF.

The broadband light source device according to embodiments described herein may be used as the radiation source in any of the apparatuses described herein.

Further embodiments are disclosed in the subsequent list of numbered clauses:
1. A broadband light source device (RDS), configured for generating broadband output radiation upon receiving pulses of pump radiation, comprising:
   a pump radiation source (PRS) for generating the pulses of pump radiation;
   a hollow-core photonic crystal fiber, HC-PCF, comprising a hollow core and a working medium disposed in the hollow core; wherein the HC-PCF comprises:
      a first region comprising an input end of the HC-PCF, the first region arranged to receive a pulse of pump radiation output by the pump radiation source, wherein the hollow core in the first region has a first diameter over the length of the first region;
      a second down-tapered region, wherein a diameter of the hollow core in the second down-tapered region reduces over the length of the second down-tapered region from the first diameter to a second diameter;
      a third region, wherein the hollow core in the third region has the second diameter over the length of the third region; and
      a fourth up-tapered region, wherein a diameter of the hollow core in the fourth up-tapered region increases over the length of the fourth up-tapered region;
   wherein at least one parameter of each of (i) the working medium, (ii) the pulse of pump radiation, and (iii) the regions, is selected such that the pulse of pump radiation is spectrally broadened in the first region, the second down-tapered region, and the third region based on soliton-self compression, and the pulse of pump radiation is further spectrally broadened in the fourth up-tapered region based on self-steepening.
2. The broadband light source device of clause1, wherein a soliton order of the pulse of pump radiation is less than 15, and the at least one parameter of each of (i) the working medium, (ii) the pulse of pump radiation, and (iii) the regions, is selected such that the soliton order of the pulse remains less than 15 as the pulse propagates along the length of one or more regions of the HC-PCF.
3. The broadband light source device of clause 1 or 2, wherein the at least one parameter of each of (i) the working medium, (ii) the pulse of pump radiation, and (iii) the regions, is selected such that a group-velocity dispersion at a central frequency of the pulse in the third region is anomalous.
4. The broadband light source device of clause 3, wherein the at least one parameter of each of (i) the working medium, (ii) the pulse of pump radiation, and (iii) the regions, is selected such that the group-velocity dispersion at the central frequency of the pulse in the first region is anomalous, and the group-velocity dispersion at the central frequency of the pulse in the third region is more strongly anomalous than in the first region.
5. The broadband light source device of any preceding clause, wherein the working medium comprises a gas, and the at least one parameter of the gas is a gas pressure.
6. The broadband light source device of any preceding clause, wherein the pulses of pump radiation have a pulse duration of less than 200 fs, optionally less than 150 fs, further optionally less than 100 fs.
7. The broadband light source device of any preceding clause, wherein the at least one parameter of each of (i) the working medium, (ii) the pulse of pump radiation, and (iii) the regions, is selected such that a pulse duration of the pulse in the third region is less than 20 fs.
8. The broadband light source device of any preceding clause, wherein the at least one parameter of each of (i) the working medium, (ii) the pulse of pump radiation, and (iii) the regions, is selected such that a peak intensity of the pulse at an input of the third region is less than the peak intensity of the pulse at an input of the fourth region.
9. The broadband light source device of any preceding clause, wherein the pulses of pump radiation have a pulse energy of at least 100 nJ, optionally at least 200 nJ, optionally at least 400 nJ.
10. The broadband light source device of any preceding clause, wherein the pulses of pump radiation have a pulse energy less than 1.5 µJ, optionally less than 1 µJ, optionally less than 0.5 µJ.
11. The broadband light source device of any preceding clause, wherein a length of the third region is less than at least one of the second down-tapered region and the fourth up-tapered region
12. The broadband light source device of any preceding clause, wherein a length of the third region is less than 8 cm, optionally less than 6 cm, optionally less than 4 cm.
13. The broadband light source device of any preceding clause, wherein the diameter of the hollow core in the fourth up-tapered region increases over the length of the fourth up-tapered region from the second diameter to a diameter that is greater than the second diameter.
14. The broadband light source device of clause 13, wherein the diameter that is greater than the second diameter is the first diameter.
15. The broadband light source device of any preceding clause, wherein the fourth up-tapered region comprises an output end of the HC-PCF.
16. The broadband light source device of any of clauses 1 to 14, wherein the HC-PCF further comprises a fifth region coupled to the fourth up-tapered region, and the pulse of pump radiation is further spectrally broadened in the fifth region based on self-steepening, wherein the fifth region comprises an output end of the HC-PCF.
17. The broadband light source device of clause 16 when dependent on clause 13 or 14, wherein the hollow core in the fifth region has the diameter that is greater than the second diameter.
18. The broadband light source device of clause 16 or 17, wherein the at least one parameter of each of (i) the working medium, (ii) the pulse of pump radiation, and (iii) the regions, is selected such that a peak intensity of the pulse at the input of the third region is less than the peak intensity of the pulse at the input of the fifth region.
19. The broadband light source device of any of claims 16 to 18, wherein a length of the fifth region is less than a length of the first region.
20. The broadband light source device of any of clauses 16 to 19, wherein a length of the fifth region is less than a length of at least one of the second down-tapered region, the third region, and the fourth up-tapered region.
21. The broadband light source device of any preceding clause, wherein the HC-PCF further comprises a plurality of anti-resonant elements surrounding the hollow core in the first region, the plurality of anti-resonant elements surround the hollow core in at least the second down-tapered region, and further wherein a cross-sectional area of each of the anti-resonant elements decreases in the second down-tapered region with increasing distance from the first region.
22. The broadband light source device of any preceding clause, wherein the first region has a length such that the pulse of pump radiation has a pulse duration of less than 60 fs at an input of the second down-tapered region.
23. The broadband light source device of any preceding clause, wherein at least one of the second down-tapered region and the fourth up-tapered region is tapered in an adiabatic manner such that propagation of the fundamental mode is substantially maintained.
24. A metrology apparatus for determining a parameter of interest of a structure of a substrate comprising the broadband light source device according to any preceding claim.
25. A lithographic apparatus comprising the metrology apparatus according to clause24.
26. A lithographic apparatus comprising the broadband light source device according to any of clausess 1 to 23.
27. A method of generating broadband output radiation, the method comprising:
   selecting at least one parameter of each of (i) a working medium of a hollow-core photonic crystal fiber, HC-PCF, (ii) a pulse of pump radiation, and (iii) regions of the HC-PCF, wherein the regions of the HC-PCF comprise:
      a first region comprising an input end of the HC-PCF, the first region arranged to receive the pulse of pump radiation, wherein the hollow core in the first region has a first diameter over the length of the first region;
      a second down-tapered region, wherein a diameter of the hollow core in the second down-tapered region reduces over the length of the second down-tapered region from the first diameter to a second diameter;
      a third region, wherein the hollow core in the third region has the second diameter over the length of the third region; and
      a fourth up-tapered region, wherein a diameter of the hollow core in the fourth up-tapered region increases over the length of the fourth up-tapered region;
   generating the pulse of pump radiation for reception by, and propagation through, the HC-PCF from the input end to an output end of the HC-PCF;
   wherein the at least one parameter of each of (i) the working medium, (ii) the pulse of pump radiation, and (iii) the regions of the HC-PCF, are selected such that the pulse of pump radiation is spectrally broadened in the first region, the second down-tapered region, and the third region based on soliton-self compression, and the pulse of pump radiation is further spectrally broadened in the fourth up-tapered region based on self-steepening.

Although specific reference may be made in this text to the use of lithographic apparatus in the manufacture of ICs, it should be understood that the lithographic apparatus described herein may have other applications. Possible other applications include the manufacture of integrated optical systems, guidance and detection patterns for magnetic domain memories, flat-panel displays, liquid-crystal displays (LCDs), thin-film magnetic heads, etc.

Although specific reference may be made in this text to embodiments of the invention in the context of a lithographic apparatus, embodiments of the invention may be used in other apparatus. Embodiments of the invention may form part of a mask inspection apparatus, a metrology apparatus (e.g. an alignment sensor apparatus, a scatterometry apparatus, an overlay metrology apparatus), or any apparatus that measures or processes an object such as a wafer (or other substrate) or mask (or other patterning device). These apparatus may be generally referred to as lithographic tools. Such a lithographic tool may use vacuum conditions or ambient (non-vacuum) conditions.

Although specific reference may have been made above to the use of embodiments of the invention in the context of optical lithography, it will be appreciated that the invention, where the context allows, is not limited to optical lithography and may be used in other applications, for example imprint lithography.

While specific embodiments of the invention have been described above, it will be appreciated that the invention may be practiced otherwise than as described. The descriptions above are intended to be illustrative, not limiting. Thus it will be apparent to one skilled in the art that modifications may be made to the invention as described without departing from the scope of the claims set out below.

## Claims

1. A broadband light source device (RDS), configured for generating broadband output radiation upon receiving pulses of pump radiation, comprising:
a pump radiation source (PRS) for generating the pulses of pump radiation;
a hollow-core photonic crystal fiber, HC-PCF, comprising a hollow core and a working medium disposed in the hollow core; wherein the HC-PCF comprises:
a first region comprising an input end of the HC-PCF, the first region arranged to receive a pulse of pump radiation output by the pump radiation source, wherein the hollow core in the first region has a first diameter over the length of the first region;
a second down-tapered region, wherein a diameter of the hollow core in the second down-tapered region reduces over the length of the second down-tapered region from the first diameter to a second diameter;
a third region, wherein the hollow core in the third region has the second diameter over the length of the third region; and
a fourth up-tapered region, wherein a diameter of the hollow core in the fourth up-tapered region increases over the length of the fourth up-tapered region;
wherein at least one parameter of each of (i) the working medium, (ii) the pulse of pump radiation, and (iii) the regions, is selected such that the pulse of pump radiation is spectrally broadened in the first region, the second down-tapered region, and the third region based on soliton-self compression, and the pulse of pump radiation is further spectrally broadened in the fourth up-tapered region based on self-steepening.

2. The broadband light source device of claim 1, wherein a soliton order of the pulse of pump radiation is less than 15, and the at least one parameter of each of (i) the working medium, (ii) the pulse of pump radiation, and (iii) the regions, is selected such that the soliton order of the pulse remains less than 15 as the pulse propagates along the length of one or more regions of the HC-PCF.

3. The broadband light source device of claim 1 or 2, wherein the at least one parameter of each of (i) the working medium, (ii) the pulse of pump radiation, and (iii) the regions, is selected such that a group-velocity dispersion at a central frequency of the pulse in the third region is anomalous.

4. The broadband light source device of claim 3, wherein the at least one parameter of each of (i) the working medium, (ii) the pulse of pump radiation, and (iii) the regions, is selected such that the group-velocity dispersion at the central frequency of the pulse in the first region is anomalous, and the group-velocity dispersion at the central frequency of the pulse in the third region is more strongly anomalous than in the first region.

5. The broadband light source device of any preceding claim, wherein the pulses of pump radiation have a pulse duration of less than 200 fs, optionally less than 150 fs, further optionally less than 100 fs.

6. The broadband light source device of any preceding claim, wherein the at least one parameter of each of (i) the working medium, (ii) the pulse of pump radiation, and (iii) the regions, is selected such that a pulse duration of the pulse in the third region is less than 20 fs.

7. The broadband light source device of any preceding claim, wherein the at least one parameter of each of (i) the working medium, (ii) the pulse of pump radiation, and (iii) the regions, is selected such that a peak intensity of the pulse at an input of the third region is less than the peak intensity of the pulse at an input of the fourth region.

8. The broadband light source device of any preceding claim, wherein the pulses of pump radiation have a pulse energy of at least 100 nJ, optionally at least 200 nJ, optionally at least 400 nJ.

9. The broadband light source device of any preceding claim, wherein the pulses of pump radiation have a pulse energy less than 1.5 µJ, optionally less than 1 µJ, optionally less than 0.5 µJ.

10. The broadband light source device of any preceding claim, wherein a length of the third region is less than at least one of the second down-tapered region and the fourth up-tapered region

11. The broadband light source device of any preceding claim, wherein the diameter of the hollow core in the fourth up-tapered region increases over the length of the fourth up-tapered region from the second diameter to a diameter that is greater than the second diameter.

12. The broadband light source device of any of claims 1 to 11, wherein the HC-PCF further comprises a fifth region coupled to the fourth up-tapered region, and the pulse of pump radiation is further spectrally broadened in the fifth region based on self-steepening, wherein the fifth region comprises an output end of the HC-PCF.

13. The broadband light source device of claim 12 when dependent on claim 11, wherein the hollow core in the fifth region has the diameter that is greater than the second diameter.

14. A metrology apparatus for determining a parameter of interest of a structure of a substrate comprising the broadband light source device according to any preceding claim.

15. A method of generating broadband output radiation, the method comprising:
selecting at least one parameter of each of (i) a working medium of a hollow-core photonic crystal fiber, HC-PCF, (ii) a pulse of pump radiation, and (iii) regions of the HC-PCF, wherein the regions of the HC-PCF comprise:
a first region comprising an input end of the HC-PCF, the first region arranged to receive the pulse of pump radiation, wherein the hollow core in the first region has a first diameter over the length of the first region;
a second down-tapered region, wherein a diameter of the hollow core in the second down-tapered region reduces over the length of the second down-tapered region from the first diameter to a second diameter;
a third region, wherein the hollow core in the third region has the second diameter over the length of the third region; and
a fourth up-tapered region, wherein a diameter of the hollow core in the fourth up-tapered region increases over the length of the fourth up-tapered region;
generating the pulse of pump radiation for reception by, and propagation through, the HC-PCF from the input end to an output end of the HC-PCF;
wherein the at least one parameter of each of (i) the working medium, (ii) the pulse of pump radiation, and (iii) the regions of the HC-PCF, are selected such that the pulse of pump radiation is spectrally broadened in the first region, the second down-tapered region, and the third region based on soliton-self compression, and the pulse of pump radiation is further spectrally broadened in the fourth up-tapered region based on self-steepening.
